(19) **Europäisches Patentamt / European Patent Office / Office européen des brevets**

(11) **EP 2 643 943 B1**

(12) **FASCICULE DE BREVET EUROPEEN**

(45) Date de publication et mention
de la délivrance du brevet:
**18.08.2021 Bulletin 2021/33**

(21) Numéro de dépôt: **11802487.6**

(22) Date de dépôt: **21.11.2011**

(51) Int Cl.:
***H04L 9/30*** (2006.01)

(86) Numéro de dépôt international:
**PCT/FR2011/052712**

(87) Numéro de publication internationale:
**WO 2012/069747 (31.05.2012 Gazette 2012/22)**

(54) **PROCÉDÉ ET SYSTÈME D'ACCÈS CONDITIONNEL À UN CONTENU NUMÉRIQUE, TERMINAL ET DISPOSITIF D'ABONNÉ ASSOCIÉS**

VERFAHREN UND SYSTEM FÜR BEDINGTEN ZUGANG ZU DIGITALEM INHALT, ENTSPRECHENDES ENDGERÄT UND TEILNEHMERVORRICHTUNG

METHOD AND SYSTEM FOR CONDITIONAL ACCESS TO A DIGITAL CONTENT, ASSOCIATED TERMINAL AND SUBSCRIBER DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2010 FR 1059609**

(43) Date de publication de la demande:
**02.10.2013 Bulletin 2013/40**

(73) Titulaire: **Cryptoexperts SAS**
**75020 Paris (FR)**

(72) Inventeurs:
• **DELERABLEE, Cécile**
**F-75017 Paris (FR)**
• **GOUGET, Aline**
**F-75016 Paris (FR)**
• **PAILLIER, Pascal**
**F-75020 Paris (FR)**

(74) Mandataire: **Brun, Philippe Alexandre Georges**
**MED'iNVENT CONSULTING**
**Espace Mistral - Bât.A**
**297 avenue du Mistral**
**ZI ATHELIA IV**
**13705 La Ciotat Cedex (FR)**

(56) Documents cités:
**WO-A1-2007/138204**

• **DELERABLEE ET AL: "Dynamic Threshold Public-Key Encryption" In: Wagner, David: "CRYPTO 2008", 17 août 2008 (2008-08-17), ADVANCES IN CRYPTOLOGY Â CRYPTO 2008; [LECTURE NOTES IN COMPUTER SCIENCE], SPRINGER BERLIN HEIDELBERG, BERLIN, HEIDELBERG, PAGE(S) 317 - 334, XP019102502, ISBN: 978-3-540-85173-8 vol. 5157, pages 317-334, section 4.1**
• **MITSUNARI S ET AL: "A NEW TRAITOR TRACING", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E85-A, no. 2, 1 février 2002 (2002-02-01), pages 481-484, XP001117291, ISSN: 0916-8508**
• **Cécile Delerablée ET AL: "Fully Collusion Secure Dynamic Broadcast Encryption with Constant-Size Ciphertexts or Decryption Keys", Serious Games, vol. 4575, 1 January 2007 (2007-01-01), pages 39-59, XP055595680, Cham ISSN: 0302-9743, DOI: 10.1007/978-3-540-73489-5_4 ISBN: 978-3-642-33166-4**

**Description**

L'invention concerne un système et un procédé sécurisés pour transmettre entre un serveur et une pluralité d'entités, un chiffré dont le clair est exploité par lesdites entités. L'invention trouve une application privilégiée dans le domaine des systèmes et procédés d'accès conditionnel à un contenu numérique pour prévenir l'utilisation frauduleuse d'une ou plusieurs clés de déchiffrement. L'invention est particulièrement efficace et non pénalisante pour les opérateurs afin de prévenir le piratage dans le cas où plusieurs utilisateurs indélicats formeraient une coalition pour générer des données de déchiffrement à partir desquelles il est difficile de discriminer la ou les clé(s) de déchiffrement ayant permis de produire lesdites données de déchiffrement. L'invention permet ainsi de lutter efficacement contre la mise à disposition frauduleuse de contenus multimédias protégés tout en préservant les capacités de calcul nécessaire à sa mise en œuvre et la bande passante des réseaux de distribution de contenus protégés.

L'invention concerne en outre un procédé pour déclencher la révocation temporaire ou permanente du matériel électronique mis à disposition d'un abonné ou la réhabilitation éventuelle de ce dernier. L'invention concerne ainsi les adaptations dudit matériel - tels que des terminaux éventuellement couplés à des dispositifs électroniques sécurisés - et des serveurs de distributions de contenus protégés pour permettre la mise en œuvre d'un procédé d'accès conditionnel robuste et efficace.

Un opérateur de diffusion de contenus numériques opère généralement un système d'accès conditionnel (*Conditional Access System* - CAS en langue anglaise) pour mettre un contenu protégé à la disposition d'un abonné ou d'une pluralité d'abonnés. Un tel système s'appuie généralement sur des dispositifs électroniques sécurisés, tels que des cartes à puce, pour héberger les identités et/ou les droits des abonnés et pour réaliser des opérations de chiffrement, de déchiffrement ou de génération de nombres.

Selon les systèmes d'accès conditionnel connus, pour diffuser un contenu multimédia protégé, des mots de contrôle chiffrés $c$ et des contenus encodés $C$ sont transmis au travers d'un réseau de diffusion, à intervalles réguliers ou crypto-périodes, pour le moins, connus et maîtrisés par l'opérateur de diffusion. Un mot de contrôle chiffré est obtenu généralement au moyen d'une fonction de chiffrement $E$ telle que $c=E(k)$, $k$ étant la valeur dudit mot de contrôle. Un contenu encodé $C$ est quant à lui obtenu au moyen d'une fonction de codage *enc* et dudit mot de contrôle $k$, tel que $C=enc(k,M)$, $M$ étant le contenu multimédia en clair. A titre d'exemple, la fonction d'encodage peut être conforme au standard DVB-CSA (*Digital Video Broadcasting - Common Scrambling Algorithm,* en langue anglaise). Pour pouvoir visualiser ou écouter un contenu protégé, toute personne doit souscrire un abonnement. Un abonné perçoit un dispositif sécurisé et dédié, généralement sous la forme d'une carte à puce, qui couplé à un terminal, généralement appelé décodeur ou « set-top box », constitue une entité de traitement d'abonné qui permet audit abonné de décoder un contenu protégé. Les mots de contrôles chiffrés $c$ sont classiquement déchiffrés par le dispositif sécurisé qui délivre les mots de contrôle $k$ au terminal. Ce dernier est en charge de réaliser le décodage d'un contenu encodé $C$ et permet, au moyen d'une interface Homme-Machine adaptée - par exemple un téléviseur de salon, d'accéder au contenu clair $M$.

Bien que la robustesse des dispositifs d'abonné soit particulièrement réputée, la connaissance du matériel cryptographique, des algorithmes ou de secrets a permis à des pirates de « casser » la sécurité des dispositifs électroniques sécurisés remis aux abonnés. Un pirate peut alors « cloner » ou émuler un tel dispositif et mettre certaines « reproductions » à la disposition d'abonnés indélicats sans qu'il soit nécessaire d'opérer un réseau pirate pour distribuer des mots de contrôle ou contenus en clair.

Pour contrer les pirates, les opérateurs parviennent généralement à connaître l'existence d'un tel réseau pirate ou la mise sur le marché de reproductions de données de déchiffrement. En sollicitant les services d'un pirate, un opérateur peut même disposer d'un dispositif « cloné » ou émulé et l'étudier.

Un opérateur ou plus généralement toute entité « traceur » cherchant à démasquer le ou les dispositifs sécurisés d'abonné dont la sécurité a été éprouvée se heurte à une difficulté certaine pour remonter à la source du piratage. C'est notamment le cas lorsque les données de déchiffrement frauduleuses dont il dispose résultent d'une collusion de plusieurs clés de déchiffrement distinctes. En effet, selon les techniques connues les clés de déchiffrement sont peu ou pas traçables ou décelables en analysant lesdites données de déchiffrement. L'investigation est d'autant plus délicate que la collusion est étendue. Pour tenter de contourner ce problème, certains opérateurs ou traceurs ont augmenté de manière significative la taille des clés de déchiffrement des mots de contrôle ainsi que celle des chiffrés de ces derniers. Selon les solutions connues, lesdites tailles sont directement liés et croissent de manière linéaire au regard du nombre total d'abonnés ou d'une borne sur ce nombre. Certaines techniques connues, telles que décrit par exemple dans le document US2008/0075287A1, parviennent tout au plus à limiter ces tailles de l'ordre de la racine carrée du nombre d'abonnés. D'autres techniques, telles que divulguées dans le document WO2007/138204, nécessitent une taille de chiffrés d'un même ordre que la taille d'une collusion admissible. La capacité d'un traceur à discriminer une clé de déchiffrement frauduleuse s'est améliorée au détriment de la bande passante des réseaux de distribution et de la capacité de calcul des dispositifs sécurisés d'abonnés pour produire par crypto-période des mots de contrôle dont la taille du chiffré est conséquente. En outre, de telles solutions demeurent très pénalisantes et quasi inopérables lorsque le nombre d'abonnés est grand.

Il n'existe donc pas de procédés connus permettant, de tracer et d'identifier une ou plusieurs clé de déchiffrement distribuées licitement à partir de données de déchiffrement résultant de collusions tout en préservant une bande passante et une capacité de calcul réaliste pour opérer un service de distribution de contenus protégés.

Parmi les nombreux avantages apportés par l'invention, nous pouvons mentionner que l'invention permet de lutter contre la distribution d'informations à des utilisateurs illégitimes leur permettant un déchiffrement frauduleux de contenus protégés et diffusés à l'attention d'utilisateurs ayant, par exemple, contracté un abonnement payant. En effet, l'invention permet efficacement de tracer et de discriminer une clé de déchiffrement secrète et dédiée ayant servi à élaborer de telles informations. Selon différents modes de réalisation, l'invention permet de décorréler la taille des clés secrètes de déchiffrement de mots de contrôle ou de leurs chiffrés, du nombre d'abonnés et/ou de collusions admissibles. Elle offre aux opérateurs un compromis particulièrement efficace et éventuellement dynamique pour dimensionner lesdites tailles afin préserver la bande de passante du réseau de distribution et la capacité de calcul des entités de traitement d'abonnés tout en tolérant un grand nombre de collusions possibles. L'invention permet en outre de révoquer à distance une entité de traitement d'abonné dont la sécurité aurait été cassée, dit « entité traîtresse », tout en poursuivant la diffusion d'un contenu au travers du réseau de diffusion. L'invention offre ainsi, à tout opérateur de diffusion de contenus, un outil particulièrement simple et efficace pour lutter contre le piratage.

A cette fin, il est prévu notamment un procédé sécurisé pour transmettre un mot de contrôle entre un serveur et une pluralité d'entités de traitement pour respectivement produire et exploiter ledit mot de contrôle.

Un tel procédé comporte une première une étape pour produire par le serveur un mot de contrôle chiffré $c$ dont le clair $k$ est destiné à être exploité par l'entité de traitement. Il comporte en outre une étape pour transmettre le mot de contrôle chiffré $c$ produit à destination des entités de traitement ainsi qu'une étape pour réceptionner par lesdites entités le mot de contrôle chiffré $c$ et produire un mot de contrôle en clair $k$ à partir du mot de contrôle chiffré $c$ réceptionné.

Pour procurer un compromis efficacité vs résistance aux collusions de clés traîtresses, l'invention prévoit que :

- le serveur produise le chiffré d'un mot de contrôle à partir :

  - d'un vecteur $s$ de $d_s$ éléments appartenant chacun à l'ensemble $\mathbb{Z}_p^*$ des entiers non nuls modulo $p$, $p$ étant un nombre premier, $d_s$ étant un entier strictement supérieur à 1 et petit au regard du nombre d'entités de traitement ;

  - d'une valeur secrète $\gamma$ connue du serveur et appartenant à l'ensemble $\mathbb{Z}_p^*$ des entiers non nuls modulo $p$ ;

  - de deux générateurs appartenant respectivement à deux groupes cycliques $\mathbb{G}_1$ et $\mathbb{G}_2$ d'ordre $p$, paramètres d'un groupe bilinéaire

$$\beta = (p, \mathbb{G}_1, \mathbb{G}_2, \mathbb{G}_T, e(.,.))$$

  d'ordre $p$ où $e(.,.)$ est un couplage tel que

$$e : \mathbb{G}_1 \times \mathbb{G}_2 \to \mathbb{G}_T \, ,$$

  $\mathbb{G}_T$ étant un troisième groupe cyclique d'ordre p ;

- chaque entité de traitement produise un mot de contrôle $k$ en clair à partir :

  - du mot de contrôle chiffré $c$ ;
  - d'une clé de déchiffrement $DK_i$ connue de la i$^{\text{ème}}$ entité et préalablement produite à partir de :

    i. d'un vecteur $x^{(i)}$ de $d_x$ éléments appartenant chacun à l'ensemble $\mathbb{Z}_p^*$ des entiers non nuls modulo $p$, $d_x$ étant un entier strictement supérieur à 1 et petit au regard du nombre d'entités de traitement, le vecteur $x^{(i)}$ étant dédié à l'entité concernée ;

ii. de la valeur secrète $\gamma$ ;
iii. d'un générateur appartenant à l'un des groupes cycliques du groupe bilinéaire $\beta$.

Selon un mode préféré de réalisation, un tel procédé peut comporter au préalable :

- une étape pour élaborer une clé mère secrète *MK* comportant la composante secrète $\gamma$ associée à des paramètres publics dont le groupe bilinéaire $\beta$ ;
- une étape pour mémoriser ladite clé *MK* et les paramètres publics au sein du serveur ;
- une étape pour mémoriser lesdits paramètres publics au sein de chaque entité de traitement ;
- une étape pour produire, transmettre et enregistrer les clés de déchiffrement $DK_i$ dédiées et distinctes respectivement au sein des entités de traitement.

L'invention prévoit que chaque clé de déchiffrement $DK_i$ produite puisse avantageusement comporter une composante de la forme $z^{\frac{1}{P(\gamma)}}$ , $z$ étant un générateur appartenant à l'un des groupes cycliques du groupe bilinéaire $\beta$ et $P$ étant un polynôme en $\gamma$.

Selon un mode d'application préféré, l'invention concerne en outre un procédé d'accès conditionnel à un contenu numérique comportant :

- une étape pour encoder un contenu numérique *M* et produire un contenu encodé *C* à l'aide d'une fonction d'encodage mise en œuvre par un serveur de diffusion de contenus numériques protégés ;
- une étape pour produire par ledit serveur de diffusion de contenus numériques protégés un mot de contrôle chiffré *c* dont le clair *k* est destiné à être utilisé par une pluralité d'entités de traitement d'abonné pour décoder ledit contenu encodé *C*;
- une étape pour émettre au travers d'un réseau de distribution et à destination des entités de traitement d'abonné, lesdits contenu encodé *C* et mot de contrôle chiffré *c* ;
- une étape pour réceptionner par chaque entité de traitement d'abonné lesdits contenu encodé *C* et mot de contrôle chiffré *c* ;
- une étape pour produire le clair *k* d'un mot de contrôle par chaque entité de traitement d'abonné à partir du chiffré *c* ;
- une étape pour décoder par chaque entité de traitement d'abonné le contenu encodé *C* et produire un contenu clair *M* à partir d'une fonction de décodage et du clair *k ;*
- une étape pour restituer ledit contenu clair *M* au moyen d'une interface adaptée audit contenu clair.

Les étapes pour produire et transmettre un mot de contrôle chiffré par le serveur de diffusion de contenus numériques protégés ainsi que les étapes pour réceptionner et produire le clair d'un mot de contrôle par les entités de traitement d'abonnés sont conformes au procédé sécurisé pour transmettre un mot de contrôle entre un serveur et une pluralité d'entités de traitement conforme à l'invention.

L'invention concerne en outre un système d'accès conditionnel à un contenu numérique comportant un serveur en liaison avec une pluralité d'entités de traitement d'abonné pour mettre en œuvre un procédé d'accès conditionnel conforme à l'invention.

D'autres caractéristiques et avantages apparaîtront plus clairement à la lecture de la description qui suit et à l'examen des figures qui l'accompagnent parmi lesquelles :

- la figure 1 présente un système d'accès conditionnel conforme à l'état de la technique ;
- la figure 2 décrit un système d'accès conditionnel conforme à l'invention ;
- la figure 3 décrit un mode de réalisation d'un procédé d'accès conditionnel conforme à l'invention.

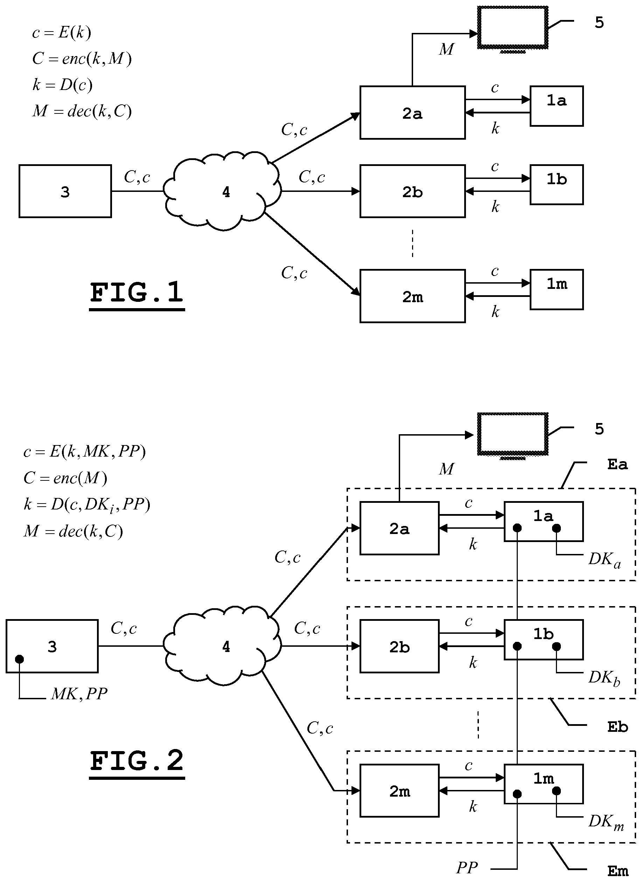

La figure 1 permet de présenter un système d'accès conditionnel à un contenu numérique selon l'état de la technique. Il consiste en un réseau de diffusion 4 mis en œuvre par un opérateur de diffusion de contenus protégés. Ainsi, depuis un serveur de contenus 3, sont émis conjointement des mots de contrôle *c* et des contenus *C* respectivement chiffrés et encodés. Le serveur 3 encode pour cela un contenu clair *M* au moyen d'une fonction d'encodage *enc* et d'un mot de contrôle *k,* ce dernier étant produit par ledit serveur 3. On obtient ainsi un contenu encodé *C* tel que *C=enc(k,M)*. Un chiffré *c* du mot de contrôle *k* est également émis ou « broadcasté » conjointement avec le contenu encodé *C*. Pour cela, le serveur chiffre au moyen d'une fonction de chiffrement *E* ledit mot de contrôle *k* pour obtenir *c* tel que *c=E(k)*.

Les mots de contrôle chiffrés *c* et les contenus chiffrés *C* sont transmis, via le réseau de diffusion 4, à des terminaux 2a à 2m. Ces derniers ont la charge respectivement de décoder en temps réel les contenus encodés *C* émis par le serveur 3. Ainsi un terminal - tel que par exemple le décodeur 2a - met en œuvre une fonction de décodage *dec* et l'applique au contenu encodé *C* pour obtenir le contenu clair *M*. Ce dernier peut être visualisé en utilisant un téléviseur de salon 5 ou toute autre interface adaptée pour restituer le contenu clair. Pour appliquer la fonction de décodage *dec,* un terminal doit connaître la valeur du mot de contrôle *k* qui a été utilisé par le serveur 3 pour encoder le contenu *M* .

Selon l'état de l'art et conformément à la figure 1, un terminal 2a à 2m reçoit un mot de contrôle chiffré *c* tel que *c* = *E*(*k*) et le transmet à un dispositif électronique sécurisé 1a à 1m, généralement dédié à un abonné. Le terminal 2a reçoit, au travers du réseau 4, régulièrement des couples (*C,c*) et transmet à un dispositif 1a les mots de contrôles chiffrés *c*. Le dispositif 1a peut déchiffrer un mot de contrôle chiffré *c* au moyen d'une fonction de déchiffrement *D* pour obtenir le mot de contrôle *k* ayant servi à encoder un contenu *M*. Ainsi *k*=*D*(*c*). Il en est de même pour tout autre terminal, tel que 2b à 2m, chacun coopérant respectivement avec un dispositif 1b à 1m. Selon une variante de réalisation, le serveur 3 peut utiliser un secret, par exemple sous la forme d'une clé *Kc* pour chiffrer un mot de contrôle *k*. Ainsi *c* = *E*(*Kc,k*). Dans ce cas, un dispositif, tel que le dispositif 1a à 1m, met en œuvre une fonction réciproque de déchiffrement *D,* telle que *k* = *D*(*Kd,c*) où *Kd* est une clé de déchiffrement connue par le dispositif. Selon les fonctions de chiffrement *E* et de déchiffrement *D*, les clés *Kc* et *Kd* peuvent être identiques. C'est le cas d'un chiffrement / déchiffrement symétrique. En variante, selon un schéma dit de « *broadcast encryption* », *Kc* est une clé publique ou secrète dédiée à l'opérateur et *Kd* est une clé secrète dédiée au dispositif (ou en variante à un groupe de dispositifs) et connue de l'opérateur. Selon cette variante, il existe ainsi plusieurs clés individuelles de déchiffrement et chacun des dispositifs licitement émis et remis aux abonnés dudit opérateur dispose d'une telle clé de déchiffrement individuelle.

Pour mettre à mal un tel système d'accès conditionnel, des pirates ont développé leur connaissance du matériel cryptographique, des algorithmes ou de secrets mis en œuvre notamment par les dispositifs d'abonnés. Certains savent - ou pourrait - « casser » la sécurité desdits dispositifs électroniques d'abonné et parvenir à lire la valeur d'une ou plusieurs clés de déchiffrement utilisées pour produire des mots de contrôle valides pour *in fine* décoder des messages encodés. Il reste alors à mettre frauduleusement sur un marché parallèle ces clés - que nous nommerons « clés traîtresses » pour que des utilisateurs indélicats puissent intégrer une clé traîtresse dans un terminal pirate et ainsi bénéficier d'un accès illicite à des contenus protégés. Ce type d'acte délictuel peut être grandement facilité dans le cas où un opérateur de diffusion opère un système d'accès conditionnel pour lequel les fonctions de décodage de contenus et de déchiffrement de mots de contrôle chiffrés sont réalisées par une seule et même entité de traitement mise à la disposition d'un abonné. Ainsi, une telle entité ne comporte pas nécessairement les fonctions de sécurité permettant de protéger les moyens de mémorisation des clés de déchiffrement et/ou les algorithmes et procédés mis en œuvre pour produire les mots de contrôle. Les fuites découlant de la mise en œuvre peu sécurisée de tels algorithmes permet de révéler la clé de déchiffrement manipulée, etc.

Un pirate peut ainsi mettre certaines « reproductions » de clés de déchiffrements à la disposition de clients indélicats sans nécessairement opérer un réseau pirate pour distribuer les mots de contrôle ou contenus en clair.

Pour tenter de contrer de tels agissements, il est utile de pouvoir tracer ou détecter la clé de déchiffrement « traîtresse » ou compromise à l'origine de la reproduction. Une telle clé doit donc être traçable c'est-à-dire comporter un marqueur ou une composante qui est dédié(e) à un abonné. Ainsi, en disposant d'un terminal pirate ou du logiciel mis en œuvre par ce dernier, il existe des procédés d'analyse pour qu'un traceur puisse déceler une donnée secrète manipulée. La tâche du traceur se complique quand plusieurs clés traîtresses sont combinées par un pirate ou par une coalition de pirates.

L'invention permet de mettre en échec ces différents scenari de piratage.

La figure 2 permet d'illustrer un système d'accès conditionnel comme exemple d'application préféré de l'invention. Comme pour un système connu, l'invention prévoit un réseau de diffusion 4 mis en œuvre par un opérateur de diffusion de contenus protégés - ou plus généralement tout moyen - pour transmettre, depuis un serveur de contenus 3, des contenus encodés *C* à destination d'une pluralité d'entités de traitement d'abonné, telles que les entités Ea, Eb, ..., Em. L'invention prévoit en outre que les contenus encodés *C* sont émis conjointement avec des chiffrés de mots de contrôle *c* dont les clairs permettent de décoder lesdits contenus encodés par chaque entité d'abonné. Pour cela, le serveur 3 encode un contenu clair *M* au moyen d'une fonction d'encodage *enc.* On obtient ainsi un contenu encodé *C* tel que *C* = *enc*(*M*).

La sécurité d'un tel système réside essentiellement dans le fait que les mots de contrôle puissent être produits, échangés et exploités de manière sécurisée par le serveur et la pluralité d'entités de traitement d'abonné. De tels mots de contrôle pourraient tout aussi bien être utilisés dans un contexte applicatif différent d'un système d'accès conditionnel à des contenus numériques protégés.

L'invention s'appuie sur la notion mathématique de couplage dans des groupes d'ordre premier, notion exploitée dans de nombreuses publications dont les documents US2008/0075287A1 ou WO2007/138204 précédemment mentionnés. Un tel couplage est une application bilinéaire généralement utilisé en cryptographie dans le domaine des courbes elliptiques notamment.

Soit $\beta$, un groupe bilinéaire

$$\beta = (p, \mathbb{G}_1, \mathbb{G}_2, \mathbb{G}_T, e(.,.))$$

d'ordre $p$ premier tel que $|p| = \lambda$, $\lambda$ définissant la taille des éléments en tant que paramètre de sécurité. $\mathbb{G}_1$, $\mathbb{G}_2$ et $\mathbb{G}_T$ sont trois groupes cycliques d'ordre $p$ et

$$e : \mathbb{G}_1 \times \mathbb{G}_2 \to \mathbb{G}_T$$

un couplage. Un groupe cyclique est un ensemble algébrique tel que $g^{p+1}$ est égal à $g$, $p$ définissant l'ordre du groupe cyclique et $g$ un élément du groupe que l'on nomme « générateur ». Au sens de l'invention, une relation particulière entre les groupes $\mathbb{G}_1$ et $\mathbb{G}_2$ n'est pas requise. Les deux groupes peuvent être identiques ou plus généralement, un isomorphisme $\Psi$ entre $\mathbb{G}_1$ et $\mathbb{G}_2$ peut être défini. L'invention prévoit que soient privilégiées tout éventuel isomorphisme ainsi que tout couplage efficacement calculables.

Selon un mode de réalisation préférée, une entité de traitement Ei se compose d'un terminal 2i couplé à un dispositif sécurisé 1i, par exemple une carte à puce, pour respectivement réaliser le décodage d'un contenu encodé et la production de mots de contrôle nécessaire audit décodage. La figure 2 présente les entités Ea, Eb et Em comme résultant respectivement d'un terminal 2a, 2b, 2m couplé à un dispositif sécurisé d'abonné la, 1b, 1m.

Au sens de l'invention, une telle entité pourrait être un seul et même matériel qui engloberait les deux fonctions principales précédemment énoncées.

Une clé de déchiffrement secrète et dédiée est connue par chaque dispositif d'abonné (ou entité d'abonnée). Ainsi, selon la figure 2, le dispositif la de l'entité Ea associée à l'abonné a, connait la clé de déchiffrement $DK_a$. Cette clé est distincte de la clé $DK_b$, elle-même distincte de la clé $DK_m$. Ces clés ne sont connues respectivement que des entités Eb et Em (ou plus précisément des dispositifs sécurisés d'abonnés respectifs 1b et 1m). Bien que dédiées et distinctes les clés de déchiffrement selon l'invention sont traçables (c'est-à-dire identifiables lors d'une action de discrimination ou de traçage comme nos le verrons plus loin). Elles sont toutes produites à partir d'une clé mère $MK$ connue du serveur 3, ladite clé pouvant être associée à des paramètres publics $PP$ - dont le groupe bilinéaire $\beta$, paramètres connus dudit serveur mais également des différentes entités de traitement, plus précisément, selon l'exemple préféré décrit en liaison avec la figure 2, connus des dispositifs la à 1m.

Les clés de déchiffrement permettent aux entités de traitement Ea à Em de produire un mot de contrôle $k$ dont le clair permet de décoder les contenus encodés. Ce clair $k$ est produit à partir d'un mot de contrôle chiffré $c$ émis conjointement avec le contenu encodé $C$ par le serveur 3. Selon l'exemple préféré décrit en liaison avec la figure 2, les dispositifs sécurisés la à 1m sont chargés de produire le clair $k$ au sein de chaque entité de traitement Ea à Em. Pour cela les terminaux 2a à 2m sont aptes à réceptionner les mots de contrôles chiffrés $c$ et sont également aptes à transmettre au dispositif sécurisé respectif lesdits chiffrés $c$. Les mots de contrôle clairs produits par les dispositifs la à Am sont transmis en retour aux terminaux respectifs pour qu'ils puissent décoder les contenus encodés $C$ et ainsi produire à leur tour un contenu clair M restitué par une interface homme-machine adaptée 5 à un abonné.

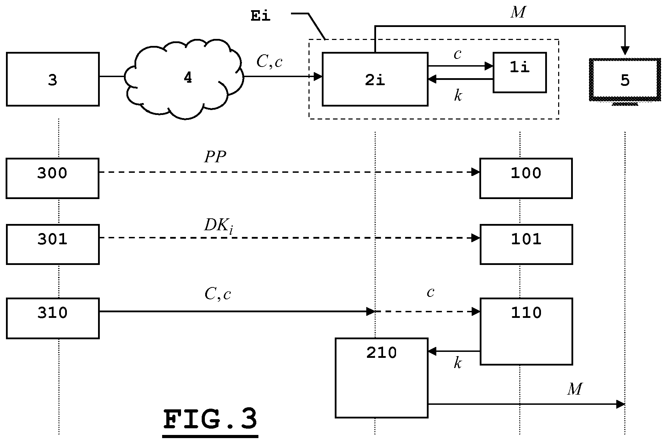

La figure 3 permet de décrire un exemple d'application de l'invention sous la forme d'un procédé d'accès conditionnel à un contenu protégé mis en œuvre par un système tel que celui décrit en liaison avec la figure 2. Par mesure de simplification, la pluralité d'entités de traitement est matérialisée par une entité Ei sous la forme d'un terminal 2i associé à un dispositif sécurisé d'abonné 1i. Des contenus encodés $C$ sont transmis, depuis un serveur 3, à l'entité Ei par l'intermédiaire d'un réseau 4. Tout autre moyen de diffusion pourrait être utilisé à cette fin. Les contenus encodés sont associés à des mots de contrôle chiffrés $c$ dont le clair permet le décodage des contenus encodés. Le terminal 2i est apte à réceptionner les contenus encodés et mots de contrôles chiffrés. Ces derniers sont transmis par le terminal au dispositif d'abonné qui à l'aide de la clé de déchiffrement secrète $DK_i$ et de paramètres publics $PP$ produit le clair des mots de contrôle et les transmet en retour au terminal 2i. Celui-ci peut décoder les contenus encodés $C$ à l'aide des mots de contrôle $k$ et délivrer les contenus clairs $M$ à l'interface 5. Pour pouvoir réaliser ceci, un processus d'accès conditionnel selon l'invention, consiste en les étapes principales 310, 110 et 210 correspondant respectivement à :

-   310 : produire et émettre les contenus encodés $C$ associés aux mots de contrôle chiffrés $c$ à destination des entités de traitements ;
-   110 : produire à partir des mots de contrôles chiffrés $c$ et de la clé de déchiffrement $DK_i$ les mots de contrôles clairs $k$ ;

- 210 : décoder les contenus encodés à partir des mots de contrôle *k*.

Optionnellement, ces étapes peuvent être précédées par les étapes 300 et 100 consistant à produire des paramètres publics *PP* et à les enregistrer dans les entités de traitements Ei, plus précisément les dispositifs sécurisés. La figure 3 décrit également les étapes préalables 301 et 101 pour produire les clés de déchiffrement *DK_i* et les enregistrer dans les entités de traitement Ei, plus précisément dans les dispositifs 1i.

Au-delà de l'exemple préféré appliqué aux procédé et système d'accès conditionnel, l'invention concerne en premier lieu un procédé sécurisé pour transmettre un mot de contrôle entre un serveur et une pluralité d'entités de traitement pour respectivement produire et exploiter ledit mot de contrôle.

Examinons au travers de deux modes de réalisation comment mettre en œuvre un tel procédé - appliqué à l'exemple d'application décrit en liaison avec la figure 3.

Soit $\beta$, un groupe bilinéaire

$$\beta = (p, \mathbb{G}_1, \mathbb{G}_2, \mathbb{G}_T, e(.,.))$$

d'ordre *p* premier tel que |*p*|= $\lambda$, $\lambda$ définissant la taille des éléments en tant que paramètre de sécurité. $\mathbb{G}_1$, $\mathbb{G}_2$ et $\mathbb{G}_T$ sont trois groupes cycliques d'ordre *p* et

$$e : \mathbb{G}_1 \times \mathbb{G}_2 \to \mathbb{G}_T$$

un couplage.

Un procédé selon l'invention comporte :

- une étape 310 pour produire par le serveur un mot de contrôle chiffré *c* dont le clair *k* est destiné à être exploité 210 par l'entité de traitement ;
- une étape pour transmettre le mot de contrôle chiffré *c* produit à destination de des entités de traitement ;
- une étape pour réceptionner par lesdites entités le mot de contrôle chiffré *c* ;
- une étape pour produire 110 un mot de contrôle en clair *k* par chaque entité de traitement à partir du mot de contrôle chiffré *c* réceptionné.

Pour conserver la traçabilité des clés de déchiffrement *DK_i* tout en permettant une grande efficacité (en terme de bande passante et de capacité de traitement), l'étape 310 pour produire le chiffré d'un mot de contrôle est réalisée par un serveur 3 à partir :

- d'un vecteur *s* de *d_s* éléments appartenant chacun à l'ensemble $\mathbb{Z}_p^*$ des entiers non nuls modulo *p*, *p* étant un nombre premier, *d_s* étant un entier strictement supérieur à 1 et petit au regard du nombre d'entités de traitement ;
- d'une valeur secrète $\gamma$ connue du serveur 3 et appartenant à l'ensemble $\mathbb{Z}_p^*$ des entiers non nuls modulo *p* ;
- de deux générateurs appartenant respectivement aux groupes cycliques $\mathbb{G}_1$ et $\mathbb{G}_2$, paramètres du groupe bilinéaire

$$\beta = (p, \mathbb{G}_1, \mathbb{G}_2, \mathbb{G}_T, e(.,.)) .$$

Chaque entité de traitement Ei produit 110 un mot de contrôle *k* en clair à partir :

- du mot de contrôle chiffré *c* ;
- d'une clé de déchiffrement *DK_i* connue de l'entité Ei et préalablement produite à partir de :

- d'un vecteur $x^{(i)}$ de $d_x$ éléments appartenant chacun l'ensemble $\mathbb{Z}_p^*$ des entiers non nuls modulo $p$, $d_x$ étant un entier strictement supérieur à 1 et petit au regard du nombre d'entités de traitement, le vecteur $x^{(i)}$ étant dédié à l'entité concernée ;
- de la valeur secrète $\gamma$ ;
- d'un générateur appartenant à l'un des groupes cycliques du groupe bilinéaire $\beta$.

L'invention prévoit que les valeurs entières de $d_x$ et de $d_s$ soient petites au regard d'un nombre d'entité et donc *in fine* au regard du nombre d'abonnés ou de pirates.

Ces deux entiers sont des paramètres de sécurité permettant de déterminer et adapter le compromis efficacité vs résistance aux coalitions indélicates. Le paramètre $d_x$ permet de dimensionner la taille d'une clé de déchiffrement selon l'invention. Le paramètre $d_s$ permet directement de dimensionner la taille des mots de contrôle chiffrés.

$d_s$ a donc une incidence directe sur la bande passante du réseau de diffusion des mots de contrôle chiffrés. $d_x$ (tout comme $d_s$) a quant à lui une incidence directe sur les capacités de traitement de l'entité (ou du dispositif sécurisé) qui doit mémoriser et manipuler les clés de déchiffrement pour produire le clair des mots de contrôle à partir de leurs chiffrés.

Contrairement aux solutions connues pour lesquelles les tailles des clés et des chiffrés croissent linéairement en la taille des coalitions ou en racine carrée du nombre d'abonnés ou de groupes d'abonnés, l'invention permet de conserver des tailles particulièrement avantageuses et sans aucune mesure avec les solutions connues. Ainsi, si nous considérons qu'il existe un risque de $t$ coalitions alors un procédé selon l'invention permet de définir $d_x$ et $d_s$ tels que

$$t = C_{d_x+d_s-1}^{d_x} = \frac{(d_x+d_s-1)!}{d_x!(d_s-1)!} \; .$$

A titre d'exemples, l'invention permet d'obtenir (selon le mode de réalisation) les compromis suivants :

- pour $t$ = 120 : $d_x$ = 3 *et* $d_s$ = 7 ;
- pour $t$ = 126 : $d_x$ = 4 *et* $d_s$ = 5 *;*
- pour $t$ = 105 : $d_x$ = 2 *et* $d_s$ = 13.

Ces résultats permettent de souligner l'apport particulièrement significatif de l'invention au regard de l'état de la technique.

Comme indiqué par la figure 3, un procédé pour transmettre de manière sécurisé un mot de contrôle entre un serveur et une pluralité d'entités de traitement conforme à l'invention peut comporter une étape 300 pour élaborer et mémoriser une clé mère secrète *MK* comportant la composante secrète $\gamma$ associée à des paramètres publics dont le groupe bilinéaire $\beta$. Il peut en outre comporter une étape 100 pour mémoriser lesdits paramètres publics au sein de chaque entité de traitement - plus précisément et de manière préférée - au sein du dispositif sécurisé d'abonné de ladite entité. Lors de la souscription d'un abonnement par exemple, pour pouvoir délivrer un matériel à un abonné connaissant la clé de déchiffrement secrète et dédiée $DK_i$, un tel procédé peut comporter également une étape pour produire 301, transmettre et enregistrer 101 la clé de déchiffrement $DK_i$ au sein de l'entité de traitement - plus précisément et de manière préférée - au sein du dispositif sécurisé d'abonné de ladite entité.

Nous allons décrire successivement deux modes de réalisation d'un tel procédé. Ces deux modes de réalisation ont notamment en commun que la clé de déchiffrement $DK_i$ produite comporte une composante de la forme $z^{\frac{1}{P(\gamma)}}$, $z$ étant un générateur appartenant à l'un des groupes cycliques du groupe bilinéaire $\beta$ et $P$ étant un polynôme en $\gamma$.

Selon un premier mode de réalisation, pour un groupe bilinéaire

$$\beta = (p, \mathbb{G}_1, \mathbb{G}_2, \mathbb{G}_T, e(.,.))$$

et des paramètres de sécurité $d_x$ et $d_s$ choisis, la clé mère secrète *MK* consiste en $\gamma$ et $g$, telle que *MK* = $(\gamma, g)$. $\gamma$ est une valeur secrète appartenant à l'ensemble $\mathbb{Z}_p^*$ des entiers non nuls modulo $p$ premier. $g$ est un générateur du groupe

$\mathbb{G}_1$. La valeur de $g$ peut de manière avantageuse être choisie aléatoirement. De la même manière, on choisit, éventuellement aléatoirement, un générateur h du groupe $\mathbb{G}_2$. Avantageusement, on peut calculer $v = e(g,h)$ et associer la valeur $v$ aux composantes $\gamma$ et $g$ de la clé $MK$.

Pour constituer les paramètres publics, on calcule $g^\gamma$, $g^{\gamma^2}$, ..., $g^{\gamma^{d_s-1}}$, $h^\gamma$, $h^{\gamma^2}$, ..., $h^{\gamma^{d_x-1}}$. Outre $\beta$ et $h$, l'ensemble des ces valeurs constituent les paramètres publics.

L'ensemble de ces calculs ou tirages aléatoires peuvent être réalisés par le serveur 3 ou être réalisés et obtenus à partir d'un serveur distinct et dédié à cet effet.

Selon ce premier mode de réalisation, l'étape pour produire une clé de déchiffrement consiste à produire ladite clé comme résultant de deux composantes telles que $DK_i = (x^{(i)}, A_i)$ où $A_i = g^{\frac{1}{P(\gamma)}}$ avec

$$P(\gamma) = \left(\gamma + x_1^{(i)}\right) \cdot \left(\gamma + x_2^{(i)}\right) \cdots \left(\gamma + x_{d_x}^{(i)}\right).$$

Ainsi, lors de la souscription d'un nouvel utilisateur ou abonné $i$, la clé $DK_i$ unique et dédiée est produite puis transmise et enregistrée - préférentiellement de manière sécurisée - dans l'entité de traitement Ei qui exploitera ladite clé pour produire les mots de contrôle clairs. Plus précisément, une telle clé est enregistrée dans un dispositif sécurisé 1i composant de l'entité Ei.

Pour produire un mot de contrôle chiffré, le serveur 3 produit ledit mot comme résultant de deux composantes telles que $c = \left(s, h^{\frac{1}{Q(\gamma)}}\right)$ avec $Q(\gamma)=(\gamma+s_1)\cdot(\gamma+s_2)\cdots(\gamma+s_{d_s})$, $s$ étant un vecteur de $d_s$ éléments de $\mathbb{Z}_p^*$. On peut écrire le vecteur $s$ comme $s = (s_1, s_2, ...., s_{d_s})$.

A réception d'un mot de contrôle chiffré $c$, une entité de traitement Ei met en œuvre une étape pour produire le clair dudit mot de contrôle. Cette étape a pour objectif de retrouver un mot de contrôle $k$ dont la valeur devrait être

$$k = e(g,h)^{\frac{1}{\gamma+s}}.$$

$$k = e\left(g^\alpha, h^{\frac{1}{Q(\gamma)}}\right) \cdot e\left(A_i, h^\xi\right) \cdot e\left(A_i, h^{\frac{1}{Q(\gamma)}}\right)^\theta.$$

Cette étape consiste à produire $k$ tel que

Les élément de calcul $\alpha$, $\xi$ et $\theta$ sont tels que :

$$\alpha = 1 - \theta\left(\frac{1}{P}[Q](\gamma)\right), \quad \xi = -\theta\left(\frac{1}{Q}[P](\gamma)\right) \quad \text{et} \quad \theta = \frac{1}{\left\langle\frac{1}{P}[Q]\right\rangle^0}, \quad \frac{1}{P}[Q]$$

étant la notation pour désigner l'inverse du polynôme P modulo le polynôme $Q$, et $\left\langle\frac{1}{P}[Q]\right\rangle^0$ désignant terme de degré 0 du polynôme $\frac{1}{P}[Q]$.

Nous pouvons remarquer que $\theta$ est une constante calculable à partir des coefficients de $P$ et de $Q$, et que les

valeurs $\xi$ et $\alpha$ (qui sont polynômes en $\gamma$) ne sont pas nécessaires lors du calcul pour produire le clair du mot de contrôle. En effet, des combinaisons de puissances successives de $g^\gamma$ et de $h^\gamma$ (contenues dans les paramètres publics) permettent de reconstituer les polynômes voulus en exposant de $g$ et de $h$ et ainsi d'obtenir $g^\alpha$ et $h^\xi$, permettant de produire le clair du mot de contrôle.

Les éléments $\alpha$, $\xi$ et $\theta$ peuvent aussi être décrits de la manière suivante :

$$\alpha = 1 - \frac{\sum_{l=1}^{d_s} \frac{Q_l(\gamma)}{R_l(-s_l)}}{\sum_{l=1}^{d_s} \frac{\prod_{j \neq l}^{d_s} s_j}{R_l(-s_l)}}, \quad \xi = -\frac{\sum_{l=1}^{d_x} \frac{P_l(\gamma)}{R_{l+ds}(-s_l)}}{\sum_{l=1}^{d_s} \frac{\prod_{j \neq l}^{d_s} s_j}{R_l(-s_l)}} \quad \text{et} \quad \theta = \frac{1}{\sum_{l=1}^{d_s} \frac{\prod_{j \neq l}^{d_s} s_j}{R_l(-s_l)}}$$

avec :

$$Q_l(\gamma) = \prod_{\substack{j=1 \\ j \neq l}}^{d_s} (s_j + \gamma), \qquad P_l(\gamma) = \prod_{\substack{q=1 \\ q \neq l}}^{d_x} (x_q^{(i)} + \gamma), \qquad R_l(\gamma) = \prod_{\substack{j=1 \\ j \neq l}}^{d_s + d_x} (s_j + \gamma) \qquad \text{et}$$

$$s_{d_s + m} = x_m^{(i)} \quad \text{pour} \quad m = 1, \ldots, d_x.$$

Selon ce premier mode de réalisation, la taille de la clé de déchiffrement $DK_i$ est linéaire en $d_x$. La taille du chiffré est quant à elle linéaire en $d_s$.

Selon une variante de ce premier mode réalisation, il est possible de réduire la taille des chiffrés $c$ et des clés secrètes de déchiffrement $DK_i$. En effet, tout d'abord, le vecteur $x^{(i)} = \left( x_1^{(i)}, \ldots, x_{d_x}^{(i)} \right)$ peut être généré, lors de la production d'une clé $DK_i$ par le serveur 3, à partir d'une graine $\mu_i$. Cette graine constitue alors une composante de la clé secrète telle que $DK_i = (\mu_i, A_i)$. Réciproquement, le vecteur $x^{(i)}$ peut être retrouvé par l'entité de traitement à l'aide de ladite graine $\mu_i$ lors du déchiffrement du mot de contrôle. En outre, le vecteur $s = (s_1, \ldots, s_{d_s})$ peut être généré, lors de la production d'un chiffré $c$ par le serveur 3, à partir d'une graine $\eta$. Cette graine constitue alors une composante du chiffré telle que $c = \left( \eta, h^{\frac{1}{Q(\gamma)}} \right)$. Réciproquement, le vecteur $s$ peut être retrouvé par l'entité de traitement à l'aide de ladite graine $\eta$ lors du déchiffrement du mot de contrôle.

Selon cette variante, les tailles de la clé de déchiffrement $DK_i$ et du chiffré deviennent constantes.

Selon un deuxième mode de réalisation, pour un groupe bilinéaire

$$\beta = (p, \mathbb{G}_1, \mathbb{G}_2, \mathbb{G}_T, e(.,.))$$

et des paramètres de sécurité $d_x$ et $d_s$ choisis, la clé mère secrète $MK$ consiste en $\gamma$ et $g$, telle que $MK = (\gamma, g)$. $\gamma$ est une valeur secrète appartenant à l'ensemble $\mathbb{Z}_p^*$ des entiers non nuls modulo $p$ premier. $g$ est un générateur du groupe $\mathbb{G}_1$. La valeur de $g$ peut de manière avantageuse être choisie aléatoirement. De la même manière, on choisit, éventuellement aléatoirement, un générateur $h$ du groupe $\mathbb{G}_2$. Avantageusement, on peut calculer $v = e(g,h)$ et associer la valeur $v$ aux composantes $\gamma$ et $g$ de la clé $MK$.

Les paramètres publics consistent en $\beta$.

L'ensemble de ces calculs ou tirages aléatoires peuvent être réalisés par le serveur 3 ou être réalisés et obtenus à partir d'un serveur distinct et dédié à cet effet.

Selon ce deuxième mode de réalisation, l'étape pour produire une clé de déchiffrement consiste à produire ladite clé comme résultant de deux composantes telles que $DK_i = (A_i, B^{(i)})$ où

$$A_i = g^{\sum_{j=1}^{d_x} \frac{x_j^{(i)}}{\gamma + x_j^{(i)}}}$$

et le vecteur $B^{(i)}$ de $d_x$ éléments tels que :

$$B^{(i)} = \left( \left( B_1^{(i)}, x_1^{(i)} \right), \left( B_2^{(i)}, x_2^{(i)} \right), ..., \left( B_{d_x}^{(i)}, x_{d_x}^{(i)} \right) \right)$$

$$= \left( \left( h^{\frac{1}{\gamma + x_1^{(i)}}}, x_1^{(i)} \right), \left( h^{\frac{1}{\gamma + x_2^{(i)}}}, x_2^{(i)} \right), ..., \left( h^{\frac{1}{\gamma + x_{d_x}^{(i)}}}, x_{d_x}^{(i)} \right) \right)$$

Ainsi, lors de la souscription d'un nouvel utilisateur ou abonné $i$, la clé $DK_i$ unique et dédiée est produite puis transmise et enregistrée - préférentiellement de manière sécurisée - dans l'entité de traitement Ei qui exploitera ladite clé pour produire les mots de contrôle clairs. Plus précisément, une telle clé est enregistrée dans un dispositif sécurisé 1i composant de l'entité Ei.

Pour produire un mot de contrôle chiffré, le serveur 3 produit le mot de contrôle chiffré comme résultant de quatre composantes telles que $c = (W_1, W_2, s, U)$ avec $U = (U_1, ..., U_{d_s})$ vecteur de $d_s$ valeurs. Le vecteur $U$ est tel que

$$U_1 = h^{\frac{1}{\gamma + s_1}}, \qquad U_2 = h^{\frac{1}{(\gamma + s_1) \cdot (\gamma + s_2)}}, ..., U_{d_s} = h^{\frac{1}{(\gamma + s_1)...(\gamma + s_{d_s})}}.$$

Les composantes $W_1 = (g^\gamma)^m$,

$$W_2 = h^{\frac{m}{(\gamma + s_1)...(\gamma + s_{d_s})}} = U_{d_s}^m,$$

$m$ étant un entier.

A réception d'un mot de contrôle chiffré $c$, une entité de traitement Ei met en œuvre une étape pour produire le clair dudit mot de contrôle. Cette étape a pour objectif de retrouver un mot de contrôle $k$ dont la valeur devrait être

$$k = e(g, h)^{\frac{m \cdot d_x}{\prod_{j=1}^{d_x} (\gamma + s_j)}},$$

$m$ étant l'entier choisi précédemment. Cette étape consiste à calculer $k$ tel que

$$k = e\left( g^\gamma, \prod_{j=1}^{d_x} \left( B_j^{(i)} \right)^{\frac{1}{\prod_{l=1}^{d_s} (\gamma + s_l)}} \right) \cdot e\left( A_i, W_2 \right)$$

où

$$\prod_{j=1}^{d_x} \left( B_j^{(i)} \right)^{\frac{1}{\prod_{l=1}^{d_s} (\gamma + s_l)}} = \prod_{j=1}^{d_x} \left( B_j^{(i)} \cdot \prod_{y=1}^{d_s} U_y^{(-1)^{i+d_s} \cdot \prod_{n=1}^{y-1} (x_j^{(i)} - s_n)} \right)^{\frac{1}{\prod_{l=1}^{d_s} (x_j^{(i)} - s_l)}}.$$

Selon ce deuxième mode de réalisation, la taille de la clé de déchiffrement $DK_i$ est linéaire en $d_x$. La taille du chiffré est quant à elle linéaire en $d_s$.

Un choix particulièrement avantageux peut consister à déterminer $d_s$ et $d_x$ tels que le nombre de collusions $t$

est exponentiel en $(d_x + d_s)$.

Que ce soit dans le cadre du premier ou du deuxième mode de réalisation, il est particulièrement avantageux que la composante $A_i$ de la clé $DK_i$ soit enregistrée par moyens de mémorisation sécurisés dans chaque unité de traitement. C'est notamment le cas lorsqu'une unité de traitement comporte un dispositif sécurisé. Il suffit dans ce cas - pour garantir la robustesse du système - que ladite composante $A_i$ y soit au minimum enregistrée ou en variante la clé $DK_i$ en entier. Ne mémoriser que la composante $A_i$ permet de réduire la capacité de mémorisation sûre et nécessaire à la robustesse du système.

A titre d'exemple et afin d'illustrer l'aptitude d'un traceur à discriminer une clé de déchiffrement, nous présentons à présent une méthode de traçage. Pour décrire cette méthode, nous allons utiliser une notation de type $\langle U, V \rangle$ pour décrire un couplage (ou *pairing* selon une terminologie anglo-saxonne) équivalente à la notation $e(U,V)$ utilisée précédemment. Considérons que le traceur a pu récupérer un décodeur pirate. L'analyse de ce dernier lui permet disposer du logiciel pirate et de mettre en œuvre une méthode de traçage de type boîte blanche.

Selon une première étape, le décodeur pirate est interprété comme une séquence d'instructions formelles. Chaque instruction est composée d'une opération de référence, d'une ou plusieurs variables d'entrée et d'une variable de sortie. Classiquement, les opérations dites de référence sont listées dans un dictionnaire (le jeu d'instructions) et peuvent être de natures diverses: opérations arithmétiques ou logiques, saut conditionnels ou non, appels de sous-programmes, etc.

Dans cette phase d'interprétation abstraite classique, le décodeur est donc réécrit sous forme d'une suite d'instructions parmi lesquelles se distingueront les opérations associées au système bilinéaire ($p$, $\mathbb{G}_1$, $\mathbb{G}_2$, $\mathbb{G}_T$) mis en œuvre par le procédé de chiffrement selon l'invention :

- les opérations de multiplication $T = U \cdot U'$ dans $\mathbb{G}_1$,

- les opérations de multiplication $S = V \cdot V'$ dans $\mathbb{G}_2$,

- les opérations d'exponentiation $U = T^a$ dans $\mathbb{G}_1$,

- les opérations d'exponentiation $V = S^b$ dans $\mathbb{G}_2$,

- les opérations de couplage bilinéaire $a = \langle U, V \rangle$ (dites *pairing*) de

$$\mathbb{G}_1 \times \mathbb{G}_2 \rightarrow \mathbb{G}_T,$$

- les opérations de multiplication $\gamma = \alpha \cdot \beta$ dans $\mathbb{G}_T$,

- les opérations d'exponentiation $\beta = \alpha^c$ dans $\mathbb{G}_T$.

Ces opérations sont appelées algébriques tandis que toutes les autres seront qualifiées d'opérations annexes. Dans cette même phase d'interprétation, les variables d'entrée et de sortie de chaque instruction sont mises sous forme dite SSA (*Static Single-Assignment* selon une terminologie anglo-saxonne) de manière à pouvoir aisément déduire de cette représentation du décodeur pirate, le graphe de calcul de toute variable manipulée par lui au cours de son exécution formelle. Les variables d'entrées des instructions ne peuvent être que des quatre types suivants:

1. une variable constante faisant partie du programme de départ,
2. une variable intermédiaire,
3. une variable d'entrée du programme représentant une partie du chiffré, ou
4. une variable aléatoire issue de l'appel à une source aléatoire externe au programme du décodeur.

La variable de sortie du programme représente la donnée en clair $k$ et est issue d'un graphe de calcul à valeur de sortie dans $\mathbb{G}_T$.

Dans une seconde étape dite de spécialisation, le programme réécrit est modifié pour le rendre apte à l'identification ultérieure de traîtres. Grâce à la réécriture du programme, on peut en supprimer toutes les instructions qui ne participent pas au graphe de calcul de la variable de sortie $k$ (instructions non connexes au graphe). On cherche ensuite à fixer toutes les variables d'entrée du programme (celles de type 3 et 4) à des valeurs constantes pour lesquelles le programme parvient à déchiffrer correctement.

Cette recherche de valeurs fixes peut être conduite de manière aléatoire et exhaustive et, si le décodeur donné à l'origine est suffisamment fonctionnel (c'est-à-dire déchiffre dans une fraction significative des cas en moyenne), cette étape de recherche aboutira rapidement en quelques essais.

Lorsque des valeurs conviennent, elles sont substituées aux variables correspondantes dans le programme, de sorte que celui ci s'exécutera toujours de la même façon. Ainsi un exemple d'exécution réussie est instancié par le nouveau programme composé uniquement d'instructions effectuées sur des constantes.

Le procédé de traçage comporte à présent une étape de simplification du programme visant à obtenir une unique séquence d'instructions sans saut:

- on effectue une propagation des constantes pour supprimer toutes les instructions annexes dont les variables d'entrée sont toutes des constantes ; cette transformation exclut donc les opérations algébriques.
- on élimine les instructions dont l'exécution est tautologique:

    - les sauts conditionnels sont soit éliminés soit remplacés par des sauts non conditionnels ;
    - les appels de fonctions sont remplacés par une copie du corps de la fonction appelée ;
    - on élimine les instructions inutiles ou code mort.

A l'issue de cette phase, sont supprimés les sauts non conditionnels en juxtaposant bout à bout les séquences linéaires d'instructions par ordre chronologique d'exécution. Le programme devient alors une suite d'instructions algébriques séquentielles sans flot de contrôle.

A présent, on applique au programme obtenu plusieurs transformations de manière inductive et concurrente. On introduit pour cela :

- une instruction formelle $\text{expo}_i(u,a)$ qui représente le calcul de $u^a$ dans $\mathbb{G}_i$ avec $i \in \{1,2,T\}$ ;
- une instruction formelle de « *pairing* » étendu $\langle U,V;a \rangle$ qui représente le calcul de $\langle U,V \rangle^a$.

On procède à présent aux simplifications algébriques suivantes, de manière inductive et concurrente jusqu'à stabilisation du programme:

- chaque instruction d'exponentiation $u^a$ est remplacée par $\text{expo}_i(u,a)$ pour le $i \in \{1,2,T\}$ approprié ;
- chaque variable u est remplacée par $\text{expo}_i(u,1)$ pour le $i \in \{1,2,T\}$ approprié ;
- chaque combinaison d'instructions de type $\text{expo}_i(u \cdot v,a)$ est remplacée par $\text{expo}_i(u,a) \cdot \text{expo}_i(v,a)$ ;
- chaque combinaison d'instructions de type $\text{expo}_i(u,a) \cdot \text{expo}_i(u,b)$ est remplacée par $\text{expo}_i(u,a+b \bmod p)$ ;
- chaque combinaison d'instructions de type $\text{expo}_i(\text{expo}_i(u,a),b)$ est remplacée par $\text{expo}_i(u,ab \bmod p)$ ;
- chaque instruction de « *pairing* » $\langle U,V \rangle$ est remplacée par $\langle U,V;1 \rangle$ ;
- chaque combinaison d'instructions de type $\langle U \cdot U',V;a \rangle$ est remplacée par $\langle U,V;a \rangle \cdot \langle U',V;a \rangle$ ;
- chaque combinaison d'instructions de type $\langle U,V \cdot V';a \rangle$ est remplacée par $\langle U,V;a \rangle \cdot \langle U,V';a \rangle$ ;
- chaque combinaison d'instructions de type $\langle \text{expo}_1(U,a),V;b \rangle$ est remplacée par $\langle U,V;ab \bmod p \rangle$ ;
- chaque combinaison d'instructions de type $\langle U,\text{expo}_2(V,a);b \rangle$ est remplacée par $\langle U,V;ab \bmod p \rangle$ ;
- chaque combinaison d'instructions de type $\langle U,V;a \rangle \cdot \langle U,V;b \rangle$ est remplacée par $\langle U,V;a+b \bmod p \rangle$ ;
- chaque combinaison d'instructions de type $\text{expo}_T(\langle U,V;a \rangle,b)$ est remplacée par $\langle U,V;ab \bmod p \rangle$ ;
- on remplace $\text{expo}_i(u,0)$ par 1, $\langle U,V;0 \rangle$ par 1 et $1 \cdot u$ par u.

A l'issue de cette étape de simplification, on peut donc représenter le calcul de

$$k \in \mathbb{G}_T$$

comme le résultat d'un produit $k = k_1 \cdot k_2$ où :

- $k_1$ est un produit de $n$ « *pairings* » étendus dont les entrées $(U_i,V_i,a_i)$ pour $i = 1,...,n$ consistent en deux points $U_i$ et $V_i$ et d'un entier $a_i$ modulo $p$ tels que $(U_i,V_i) \neq (U_j,V_j)$ pour $i \neq j$. Les variables $U_i$, $V_i$ et $a_i$ sont des valeurs constantes du fait de l'étape de spécialisation. Chaque variable $U_i$, $V_i$ est nécessairement soit une constante stockée dans le programme, soit une variable d'entrée faisant partie du chiffré donné en entrée ;

- $k_2$ est un produit de $m$ éléments de $\mathbb{G}_T$ i.e. $k_2 = \text{expo}_T(\alpha_1,b_1) \cdots \text{expo}_T(\alpha_m,b_m)$ où $\alpha_i \neq \alpha_j$ pour $1 \leq i \neq j \leq m$. Chaque variable $\alpha_i$ est nécessairement soit une constante stockée dans le programme, soit une partie du chiffré.

Dans une troisième phase, on identifie le coefficient correspondant à chaque élément algébrique du chiffré c donné en entrée.

Plus précisément, si le chiffré donné en entrée contient

$$u_1,...,u_{r_1} \in \mathbb{G}_1 \, ,$$

$$v_1,...,v_{r_2} \in \mathbb{G}_2$$

et

$$w_1,...,w_{r_T} \in \mathbb{G}_T \, ,$$

- pour tout $u_{i,j} \in [1,r_1]$, on collecte toutes les valeurs $a_i$ telles que $u_j = U_i$ et $V_i \notin \{v_1,...,v_{r_2}\}$ n'est pas un élément du chiffré ;

$$\mathrm{coef}\left(u_j\right) = \left( a_{i_1},...,a_{i_{d_j}} \right) \; ;$$

on forme ainsi un vecteur

- pour tout $v_{i,j} \in [1,r_2]$, on collecte toutes les valeurs $a_i$ telles que $v_j = V_i$ et $U_i \notin \{u_1,...,u_{r_1}\}$ n'est pas un élément du chiffré ;

$$\mathrm{coef}\left(v_j\right) = \left( a_{i_1},...,a_{i_{d_j}} \right) \; ;$$

on forme ainsi un vecteur

- pour tout $w_{i,j} \in [1,r_T]$, on collecte $\mathrm{coef}(w_j) = b_i$ tel que $w_j = \alpha_i$ ;
- pour toute paire $(u_l, v_l)$, $(l,j) \in [1,r_1] \times [1,r_2]$, on collecte $\mathrm{coef}(u_l, v_l) = a_i$ où $(u_l, v_l) = (U_i, V_i)$.

Dans chacune de ces étapes d'identification, le coefficient est mis à 0 par défaut lorsqu'on ne peut trouver un indice $i$ correspondant.

On s'intéresse alors aux valeurs des $\{\mathrm{coef}(u_i), \mathrm{coef}(v_j), \mathrm{coef}(w_\varepsilon), \mathrm{coef}(u_i, v_j)\}$. Les propriétés mathématiques de l'invention assurent que ces valeurs sont des fonctions connues à l'avance impliquant des éléments $x_1,...,x_\varepsilon \in \mathbb{Z}_p$ composant les clés compromises et des paramètres fixes $s_1,...,s_l \in \mathbb{Z}_p$ composant le chiffré c donné en entrée.

Ceci forme un système d'équations multi-variées :

$$\mathrm{coef}\left(u_1\right) \;=\; f_1\left(x_1,...,x_\varepsilon, s_1,...,s_l\right)$$

$$\mathrm{coef}\left(u_2\right) \;=\; f_2\left(x_1,...,x_\varepsilon, s_1,...,s_l\right)$$

$$\vdots$$

$$\mathrm{coef}\left(u_{r_1}\right) \;=\; f_{r_1}\left(x_1,...,x_\varepsilon, s_1,...,s_l\right)$$

$$\mathrm{coef}\left(v_1\right) \;=\; g_1\left(x_1,...,x_\varepsilon, s_1,...,s_l\right)$$

$$\mathrm{coef}\left(v_2\right) \quad = \quad g_2\left(x_1,...,x_\varepsilon,s_1,...,s_l\right)$$

$$\vdots$$

$$\mathrm{coef}\left(v_{r_2}\right) \quad = \quad g_{r_2}\left(x_1,...,x_\varepsilon,s_1,...,s_l\right)$$

$$\mathrm{coef}\left(w_1\right) \quad = \quad h_1\left(x_1,...,x_\varepsilon,s_1,...,s_l\right)$$

$$\mathrm{coef}\left(w_2\right) \quad = \quad h_2\left(x_1,...,x_\varepsilon,s_1,...,s_l\right)$$

$$\vdots$$

$$\mathrm{coef}\left(w_{r_T}\right) \quad = \quad h_{r_T}\left(x_1,...,x_\varepsilon,s_1,...,s_l\right)$$

$$\mathrm{coef}\left(u_1,v_1\right) \quad = \quad q_{1,1}\left(x_1,...,x_\varepsilon,s_1,...,s_l\right)$$

$$\vdots$$

$$\mathrm{coef}\left(u_{r_1},v_{r_2}\right) \quad = \quad q_{r_1,r_2}\left(x_1,...,x_\varepsilon,s_1,...,s_l\right)$$

Connaissant les valeurs numériques de ces coefficients, les paramètres fixes $s_j$ et les fonctions $f_i$, $g_j$, $h_\varepsilon$, $q_{a,b}$, le système peut être inversé pour retrouver au moins l'un des éléments $x_1,...,x_\varepsilon$ composant l'une des clés compromises et ainsi identifier complètement cette clé. Cette phase peut nécessiter d'avoir $\varepsilon \le B(r_1,r_2,r_T)$ où $B(r_1,r_2,r_T)$ est une borne qui dépend du mode de réalisation de l'invention. Les fonctions $f_i$, $g_j$, $h_k$, $q_{a,b}$ dépendent également du mode de réalisation de l'invention.

A titre d'exemple, si nous nous plaçons dans le cadre du deuxième mode de réalisation précédemment décrit, tout programme de déchiffrement fait apparaître le vecteur $x^{(i)}$ de (ou des) l'utilisateur (s) $i$, sous forme masquée ou en clair. Le traceur a ainsi accès à des $x^{(i)}$ qui ont été distribués à un ou plusieurs utilisateurs, qui sont dès lors identifiés comme traîtres.

L'invention prévoit également que l'on puisse révoquer une unité de traitement, par exemple si elle a été identifiée comme traîtresse ou pour toute autre raison, et ainsi interdire à ladite entité de produire un mot de contrôle valide pour permettre par exemple de décoder un contenu encodé.

L'invention prévoit que l'on puisse mettre en œuvre deux types de révocation : une révocation temporaire ou définitive.

Une révocation temporaire permet qu'une ou plusieurs entités traîtresses ne puissent plus provisoirement produire des mots de contrôle clairs valides. Une révocation permanente inhibe une telle production.

Pour illustrer cette variante et à titre d'exemple, nous allons décrire les adaptations apportées à un procédé sécurisé conforme à l'invention selon le deuxième mode de réalisation.

Des adaptations similaires pourraient aussi bien être réalisées sur d'autres procédés conformes à l'invention.

Pour mettre en œuvre une révocation permanente, l'invention prévoit deux étapes additionnelles aux procédés précédemment décrits. La première étape consiste à générer des données de révocation $D_\mathfrak{R}$ qui sont transmises à l'ensemble des entités de traitement. Ces données permettent de définir l'exclusion d'un ensemble $\mathfrak{R}$ d'une ou plusieurs entités traîtresses. La seconde étape additionnelle consiste à mettre à jour les clés de déchiffrement $DK_i$ des entités n'appartenant pas à $\mathfrak{R}$ pour qu'elles puissent continuer à produire des mots de contrôle valides.

Considérons que les entités traîtresses sont les entités E1 à Er (ou dispositifs sécurisés d'abonnés $1_l$ à $1_r$).

Numérotons de 1 à $r$ lesdites entités. La première étape pour définir les données de révocation $D_\mathfrak{R}$ consiste à calculer,

selon cet exemple, $D_{\Re} = \left( R_1, ..., R_r \right)$ avec $R_1 = h^{\frac{1}{\gamma + x_j^{(1)}}}$ , $R_2 = h^{\frac{1}{\left(\gamma + x_j^{(1)}\right)\cdot\left(\gamma + x_j^{(2)}\right)}}$ , ...,

$R_r = h^{\frac{1}{\left(\gamma + x_j^{(1)}\right)\cdots\left(\gamma + x_j^{(r)}\right)}}$ pour une valeur de $j \in [1, d_x]$, par exemple $j$=1. La valeur du générateur $h$ est alors modifiée pour prendre la valeur de $R_r$: $h \leftarrow R_r = h^{\frac{1}{\left(\gamma + x_j^{(1)}\right)\cdots\left(\gamma + x_j^{(r)}\right)}}$ . Sont alors diffusées à l'ensemble des entités les données de révocation $D_{\Re} = \left( R_1, ..., R_r \right)$ .

La seconde étape additionnelle consiste à présent à modifier les clés de déchiffrement $DK_i$ des entités n'appartenant pas à $\Re$ pour qu'elles puissent continuer à produire des mots de contrôle valides. La clé $DK_{i,\Re}$ correspondant

au $i^{\text{ème}}$ utilisateur ou abonné produite, à partir de $D_{\Re}$, est telle que $DK_{i,\Re} = \left( A_i, B^{(i,\Re)} \right)$ . Le vecteur

$B^{(i,\Re)} = \left( \left( B_1^{(i,\Re)}, x_1^{(i)} \right), \left( B_2^{(i,\Re)}, x_2^{(i)} \right), ..., \left( B_{d_x}^{(i,\Re)}, x_{d_x}^{(i)} \right) \right)$ de $d_x$ éléments est tel que

$$B_j^{(i,\Re)} = \left( B_j^{(i)} \right)^{\frac{1}{\Pi_{j=1}^{r}\left(\gamma + x_w^{(l)}\right)}} = \left( B_j^{(i)} \cdot \prod_{m=1}^{r} R_m^{(-1)^{i+r}\cdot\Pi_{n=1}^{m-1}\left(x_j^{(i)} - x_w^{(n)}\right)} \right)^{\frac{1}{\Pi_{j=1}^{r}\left(\gamma - x_w^{(l)}\right)}}$$

pour une valeur de $w \in [1, d_x]$, par exemple, $w$=1.

Le calcul de la nouvelle valeur $DK_{i,\Re}$ peut être mis en œuvre par chaque entité de traitement conforme à l'invention. Ce calcul peut en variante être réalisé par une entité tierce. Tout autre mode opératoire pour mettre à jour ladite clé peut être également exploité.

L'invention prévoit en variante que les données de révocation puissent transmises aux entités de traitement conjointement aux mots de contrôle chiffrés. Ainsi il n'est pas nécessaire de transmettre selon un mode dédié lesdites données. Ces dernières peuvent par exemple faire partie intégrante du chiffré tel que $c = \left( W_1, W_2, s, U, D_{\Re} \right)$ selon le deuxième mode de réalisation d'un procédé pour transmettre un mot de contrôle prévu par l'invention.

En outre, il peut être prévu que la modification de la clé de déchiffrement $DK_i \leftarrow DK_{i,\Re}$ soit réalisée par l'entité de traitement juste avant l'étape pour produire un mot de contrôle clair.

Nous pouvons remarquer que pour mettre en œuvre une révocation permanente, l'étape réalisée par le serveur pour produire la clé $DK_i$ ainsi que celle réalisée par les entités pour produire le clair du mot de contrôle $k$ sont inchangées. Le générateur $h$ quant à lui n'est plus fixe pour produire le chiffré. En effet $h$ dépend de l'ensemble des entités révoquées. La clé de déchiffrement n'est également plus fixe lors de la production du clair $k$ .

L'invention prévoit en outre d'adapter un procédé conforme à l'invention pour mettre en œuvre une révocation temporaire. Comme précédemment, utilisons l'exemple du deuxième mode de réalisation d'un procédé conforme à l'invention pour illustrer cette fonctionnalité. De la même manière, considérons que les entités traîtresses sont les entités E1 à Er (ou dispositifs sécurisés d'abonnés $1_1$ à $1_r$) numérotées de 1 à $r$.

Une première étape additionnelle consiste - au même titre que pour la révocation permanente - à calculer des

données de révocations $D_{\Re}$ telle que $D_{\Re} = \left( R_1, ..., R_r \right)$ avec $R_1 = h^{\frac{1}{\gamma + x_j^{(1)}}}$ , $R_2 = h^{\frac{1}{\left(\gamma + x_j^{(1)}\right)\cdot\left(\gamma + x_j^{(2)}\right)}}$ , ...,

$$R_r = h^{\frac{1}{\left(\gamma+x_j^{(1)}\right)\cdots\left(\gamma+x_j^{(r)}\right)}}$$

pour une valeur de $j \in [1, d_x]$ par exemple $j=1$. La valeur du générateur $h$ est alors modifiée pour prendre la valeur de $R_r$:

$$h \leftarrow R_r = h^{\frac{1}{\left(\gamma+x_j^{(1)}\right)\cdots\left(\gamma+x_j^{(r)}\right)}} .$$

Le serveur produit le mot de contrôle chiffré comme résultant de composantes telles que

$$c = \left(W_1, W_2, s, U, D_\mathfrak{R}, x_j^{(1)}, ..., x_j^{(r)}\right) .$$ Les quatre premières composantes $W_1$, $W_2$, $s$ et $U$ sont produites classiquement (à la différence que $h$ est préalablement modifié tel que $h \leftarrow R_r$). $U = (U_1, ..., U_{d_s})$ est un vecteur de $d_s$ valeurs tel

$$U_1 = h^{\frac{1}{\gamma+s_1}}, U_2 = h^{\frac{1}{\left(\gamma+s_1\right)\cdot\left(\gamma+s_2\right)}}, ..., U_{d_s} = h^{\frac{1}{\left(\gamma+s_1\right)...\left(\gamma+s_{d_s}\right)}} ,$$

que $W_1 = (g^\gamma)^m$,

$$W_2 = h^{\frac{m}{\left(\gamma+s_1\right)...\left(\gamma+s_{d_s}\right)}} = U_{d_s}^m ,$$ $m$ étant un entier. Le chiffré comporte en outre $D_\mathfrak{R}$ et $x_j^{(1)}, ..., x_j^{(r)}$ pour la valeur de $j$ choisie.

A réception d'un mot de contrôle chiffré $c$, une entité de traitement Ei met en œuvre une étape pour produire le clair dudit mot de contrôle.

$$k = e\left(g^\gamma, \prod_{j=1}^{d_x}\left(B_j^{(i,\mathfrak{R})}\right)^{\frac{1}{\prod_{l=1}^{d_s}\left(\gamma+s_l\right)}}\right) \cdot e\left(A_i, W_2\right)$$

Cette étape est adaptée pour calculer $k$ tel que où

$$\prod_{j=1}^{d_x}\left(B_j^{(i,\mathfrak{R})}\right)^{\frac{1}{\prod_{l=1}^{d_s}\left(\gamma+s_l\right)}} = \prod_{j=1}^{d_x}\left(B_j^{(i)} \cdot \prod_{y=1}^{r} U_y^{(-1)^{i+r} \cdot \prod_{n=1}^{y-1}\left(x_j^{(i)}-s_n\right)}\right)^{\frac{1}{\prod_{l=1}^{r}\left(x_j^{(i)}-s_l\right)}} .$$

Nous pouvons remarquer que pour mettre en œuvre une révocation temporaire, l'étape pour produire la clé $DK_i$ demeure inchangée. Le générateur $h$ n'est plus fixe car il dépend de l'ensemble des entités révoquées. L'étape pour produire un chiffré est simplement précédée par l'affection dudit générateur avant de produire un chiffré. La production du clair du mot de contrôle $k$ est quant à elle adaptée pour mettre en œuvre la révocation temporaire.

L'invention a été décrite en liaison avec le domaine de l'accès conditionnel à des contenus protégés comme exemple d'application préférée. L'invention pourrait être appliquée à d'autres domaines pour lesquels il est nécessaire de transmettre un chiffré à une pluralité d'entités de traitement dont le clair est exploité par lesdites entités.

## Revendications

1. Procédé sécurisé pour transmettre un mot de contrôle entre un serveur (3) et des entités de traitement (Ea, Eb, Em, Ei) pour respectivement produire et exploiter ledit mot de contrôle, ledit procédé comportant :

   - une étape pour produire (310) par le serveur (3) un mot de contrôle chiffré $c$ dont le clair $k$ est destiné à être exploité par lesdites entités de traitement (Ea, Eb, Em, Ei) ;
   - une étape pour transmettre le mot de contrôle chiffré $c$ produit à destination des entités de traitement (Ea, Eb, Em, Ei) ;
   - une étape pour réceptionner par lesdites entités de traitement (Ea, Eb, Em, Ei) le mot de contrôle chiffré $c$ ;
   - une étape pour produire (110) un mot de contrôle en clair $k$ par chaque entité de traitement (Ea, Eb, Em, Ei) à partir du mot de contrôle chiffré *c* réceptionné ;

**caractérisé en ce que** :

- l'étape pour produire (310) par le serveur (3) un mot de contrôle chiffré *c* consiste à produire ce dernier à partir :

i. d'un vecteur *s* de $d_s$ éléments appartenant chacun à l'ensemble $\mathbb{Z}_p^*$ des entiers non nuls modulo *p, p* étant un nombre premier, $d_s$ étant un entier strictement supérieur à 1 et petit au regard du nombre d'entités de traitement (Ea, Eb, Em, Ei) ;

ii. d'une valeur secrète $\gamma$ connue du serveur et appartenant à l'ensemble $\mathbb{Z}_p^*$ des entiers non nuls modulo *p* ;

iii. de deux générateurs appartenant respectivement à deux groupes cycliques $\mathbb{G}_1$ et $\mathbb{G}_2$ d'ordre *p*, paramètres d'un groupe bilinéaire

$$\beta = (p, \mathbb{G}_1, \mathbb{G}_2, \mathbb{G}_T, e(.,.))$$

d'ordre *p* où *e*(.,.) est un couplage tel que

$$e : \mathbb{G}_1 \times \mathbb{G}_2 \rightarrow \mathbb{G}_T , \quad \mathbb{G}_T$$

$\mathbb{G}_T$ étant un troisième groupe cyclique d'ordre p ;

- l'étape pour produire (110) un mot de contrôle en clair *k* par chaque entité de traitement (Ea, Eb, Em, Ei) consiste à produire ce dernier à partir :

i. du mot de contrôle chiffré *c* ;
ii. d'une clé de déchiffrement $DK_i$ connue de la i$^{ème}$ entité de traitement et préalablement produite à partir :

a) d'un vecteur $x^{(i)}$ de $d_x$ éléments appartenant chacun à l'ensemble $\mathbb{Z}_p^*$ des entiers non nuls modulo *p*, $d_x$ étant un entier strictement supérieur à 1 et petit au regard du nombre d'entités de traitement (Ea, Eb, Em, Ei), le vecteur $x^{(i)}$ étant dédié à l'entité de traitement concernée ;
b) de la valeur secrète $\gamma$ ;
c) d'un générateur appartenant à l'un des groupes cycliques du groupe bilinéaire $\beta$ ;
de sorte que la clé de déchiffrement $DK_i$ produite comporte des composantes telles que $DK_i=(x^{(i)}, A_i)$

où $A_i$ est une composante de la forme $z^{\frac{1}{P(\gamma)}}$ , *z* étant un générateur appartenant à l'un des groupes cycliques du groupe bilinéaire $\beta$ et *P* étant un polynôme en $\gamma$ de degré $d_x$ produit à partir de $x^{(i)}$;

- la production de la clé de déchiffrement $DK_i$, l'étape (310) de production du mot de contrôle chiffré *c* et l'étape (110) de production du mot de contrôle en clair *k* sont mutuellement agencées de sorte qu'un procédé de traçage en boîte blanche, exploitant la valeur secrète $\gamma$ et une pluralité de mots de contrôle en clair *k* produits par un procédé de déchiffrement exploitant conjointement un nombre de clés de déchiffrement $DK_i$ compromises,

$$t = C_{d_x+d_s-1}^{d_x} = \frac{(d_x+d_s-1)!}{d_x!(d_s-1)!} ,$$

ce nombre étant inférieur ou égal à produit au moins un vecteur $x^{(i)}$ exploité pour produire l'une desdites clés de déchiffrement $DK_i$, ledit vecteur $x^{(i)}$ ainsi produit identifiant l'une desdites clés de déchiffrement $DK_i$ compromises.

2. Procédé selon la revendication précédente comportant au préalable:

   - une étape pour élaborer (300) une clé mère secrète $MK$ comportant la composante secrète $\gamma$ associée à des paramètres publics dont le groupe bilinéaire $\beta$ ;
   - une étape pour mémoriser ladite clé $MK$ et les paramètres publics au sein du serveur ;
   - une étape pour mémoriser (100) lesdits paramètres publics au sein de chaque entité de traitement ;
   - une étape pour produire (301), transmettre et enregistrer (101) les clés de déchiffrement $DK_i$ dédiées et distinctes respectivement au sein des entités de traitement.

3. Procédé selon la revendication 2, **caractérisé en ce que** :

   - ledit procédé comporte :

   i. une étape pour choisir $g$ et $h$ deux générateurs appartenant respectivement aux groupes cycliques $\mathbb{G}_1$ et $\mathbb{G}_2$ ;

   ii. une étape pour produire comme paramètres publics - outre $\beta$ et $h$, les composantes $g^\gamma$, $g^{\gamma 2}$, ..., $g^{\gamma^{d_s-1}}$, $h^\gamma$, $h^{\gamma 2}$, .., $h^{\gamma^{d_x-1}}$ ;

   - la clé secrète $MK$ consiste en $\gamma$ et $g$ ;
   - l'étape pour produire (301) une clé de déchiffrement $DK_i$ consiste à produire ladite clé comme résultant de deux composantes telles que $DK_i=(x^{(i)},A_i)$ où $A_i = g^{\frac{1}{P(\gamma)}}$ avec

   $$P(\gamma) = \left(\gamma + x_1^{(i)}\right) \cdot \left(\gamma + x_2^{(i)}\right) \cdots \left(\gamma + x_{d_x}^{(i)}\right) \ ;$$

   - l'étape pour produire (310) le mot de contrôle chiffré consiste à produire ledit mot comme résultant de deux composantes telles que $c = \left( s, h^{\frac{1}{Q(\gamma)}} \right)$ avec $Q(\gamma)=(\gamma+s_1)\cdot(\gamma+s_2)\cdots(\gamma+s_{d_s})$ ;

   - l'étape pour produire (110) le mot de contrôle clair $k$ consiste à calculer $k$ tel que

   $$k = e\left( g^\alpha, h^{\frac{1}{Q(\gamma)}} \right) \cdot e\left( A_i, h^\xi \right) \cdot e\left( A_i, h^{\frac{1}{Q(\gamma)}} \right)^\theta$$

   où $\theta = \dfrac{1}{\sum_{l=1}^{d_s} \dfrac{\prod_{j\neq l}^{d_s} s_j}{R_l(-s_l)}}$,

   $$\alpha = 1 - \frac{\sum_{l=1}^{d_s} \dfrac{Q_l(\gamma)}{R_l(-s_l)}}{\sum_{l=1}^{d_s} \dfrac{\prod_{j\neq l}^{d_s} s_j}{R_l(-s_l)}}$$

   et $\xi = -\dfrac{\sum_{l=1}^{d_x} \dfrac{P_l(\gamma)}{R_{l+ds}(-s_l)}}{\sum_{l=1}^{d_s} \dfrac{\prod_{j\neq l}^{d_s} s_j}{R_l(-s_l)}}$ avec $Q_l(\gamma) = \prod_{\substack{j=1 \\ j\neq l}}^{d_s} \left( s_j + \gamma \right)$,

$$P_l(\gamma) = \prod_{\substack{q=1 \\ q \neq l}}^{d_x} \left( x_q^{(i)} + \gamma \right), \quad R_l(\gamma) = \prod_{\substack{j=1 \\ j \neq l}}^{d_s+d_x} \left( s_j + \gamma \right)$$

et $s_{d_s+m} = x_m^{(i)}$ pour $m=1,\dots,d_x$.

4. Procédé selon la revendication 2, **caractérisé en ce que** :

- ledit procédé comporte une étape pour choisir $g$ et $h$ deux générateurs appartenant respectivement aux groupes $\mathbb{G}_1$ et $\mathbb{G}_2$ ;
- les paramètres publics consistent en $\beta$ ;
- la clé secrète $MK$ consiste en $\gamma$ et $g$ ;
- l'étape pour produire (301) une clé de déchiffrement $DK_i$ consiste à produire ladite clé comme résultant de deux composantes telles que $DK_i=(A_i,B^{(i)})$ où $A_i = g^{\sum_{j=1}^{d_x} \frac{x_j^{(i)}}{\gamma + x_j^{(i)}}}$ et le vecteur $B^{(i)}$ de $d_x$ éléments tels que

$$B^{(i)} = \left( \left( B_1^{(i)}, x_1^{(i)} \right), \left( B_2^{(i)}, x_2^{(i)} \right), \dots, \left( B_{d_x}^{(i)}, x_{d_x}^{(i)} \right) \right)$$

$$= \left( \left( h^{\frac{1}{\gamma + x_1^{(i)}}}, x_1^{(i)} \right), \left( h^{\frac{1}{\gamma + x_2^{(i)}}}, x_2^{(i)} \right), \dots, \left( h^{\frac{1}{\gamma + x_{d_x}^{(i)}}}, x_{d_x}^{(i)} \right) \right) ;$$

- l'étape pour produire (310) le mot de contrôle chiffré consiste à produire ledit mot comme résultant de 4 composantes telles que $c=(W_1,W_2,s,U)$ avec $U$ vecteur de $d_s$ valeurs tel que 1

$$U_1 = h^{\frac{1}{\gamma+s_1}}, U_2 = h^{\frac{1}{(\gamma+s_1)\cdot(\gamma+s_2)}}, \dots, U_{d_s} = h^{\frac{1}{(\gamma+s_1)\dots(\gamma+s_{d_s})}},$$

$$W_1 = \left( g^{\gamma} \right)^m, \quad W_2 = h^{\frac{m}{(\gamma+s_1)\dots(\gamma+s_{d_s})}} = U_{d_s}^m,$$

$m$ étant un entier ;

- l'étape pour produire (110) le mot de contrôle clair $k$ consiste à calculer $k$ tel que

$$k = e\left( g^{\gamma}, \prod_{j=1}^{d_x} \left( B_j^{(i)} \right)^{\frac{1}{\prod_{l=1}^{d_s}(\gamma+s_l)}} \right) \cdot e\left( A_i, W_2 \right)$$

où

$$\prod_{j=1}^{d_x} \left( B_j^{(i)} \right)^{\frac{1}{\prod_{l=1}^{d_s}(\gamma+s_l)}} = \prod_{j=1}^{d_x} \left( B_j^{(i)} \cdot \prod_{y=1}^{d_s} U_y^{(-1)^{i+d_s} \cdot \prod_{n=1}^{y-1}(x_j^{(i)}-s_n)} \right)^{\frac{1}{\prod_{l=1}^{d_s}(x_j^{(i)}-s_l)}}$$

5. Procédé selon la revendication précédente, **caractérisé en ce qu'**il comporte une étape pour produire des données

de révocation $D_{\Re}$ telles que $D_{\Re} = (R_1,\dots,R_r)$ avec $R_1 = h^{\frac{1}{\gamma+x_j^{(1)}}}$, $R_2 = h^{\frac{1}{(\gamma+x_j^{(1)})\cdot(\gamma+x_j^{(2)})}}$, ...,

$$R_r = h^{\frac{1}{\left(\gamma+x_j^{(1)}\right)\cdots\left(\gamma+x_j^{(r)}\right)}}$$

et **en ce que** le générateur $h$ prend la valeur $R_r$ préalablement à la mise en œuvre de l'étape pour produire (310) le mot de contrôle chiffré.

6. Procédé selon la revendication précédente, **caractérisé en ce qu'**il comporte une étape pour modifier la valeur de clé de déchiffrement préalablement à la mise en œuvre de l'étape pour produire (110) le clair d'un mot de contrôle, ladite clé prenant une valeur $DK_{i,\Re} = \left(A_i, B^{(i,\Re)}\right)$ avec

$$B_j^{(i,\Re)} = \left(B_j^{(i)}\right)^{\frac{1}{\Pi_{j=1}^r\left(\gamma+x_w^{(l)}\right)}} = \left(B_j^{(i)} \cdot \prod_{m=1}^r R_m^{(-1)^{i+r}\cdot\Pi_{n=1}^{m-1}\left(x_j^{(i)}-x_w^{(n)}\right)}\right)^{\frac{1}{\Pi_{j=1}^r\left(\gamma-x_w^{(l)}\right)}}$$

pour une valeur donnée de $w \in [1,d_x]$.

7. Procédé selon la revendication 5, **caractérisé en ce que** le chiffré comporte en outre $D_\Re$ et $x_j^{(1)},...,x_j^{(r)}$ pour une valeur de $j \in [1,d_x]$ choisie et **en ce que** l'étape pour produire (110) $k$ est adaptée pour produire le clair d'un mot de contrôle telle que $k = e\left(g^\gamma, \prod_{j=1}^{d_x}\left(B_j^{(i,\Re)}\right)^{\frac{1}{\Pi_{l=1}^{d_s}(\gamma+s_l)}}\right) \cdot e\left(A_i, W_2\right)$ où

$$\prod_{j=1}^{d_x}\left(B_j^{(i,\Re)}\right)^{\frac{1}{\Pi_{l=1}^{d_s}(\gamma+s_l)}} = \prod_{j=1}^{d_x}\left(B_j^{(i)} \cdot \prod_{y=1}^r U_y^{(-1)^{i+r}\cdot\Pi_{n=1}^{y-1}\left(x_j^{(i)}-s_n\right)}\right)^{\frac{1}{\Pi_{l=1}^r\left(x_j^{(i)}-s_l\right)}}.$$

8. Procédé d'accès conditionnel à un contenu numérique comportant :

- une étape pour encoder un contenu numérique $M$ et produire un contenu encodé $C$ à l'aide d'une fonction d'encodage mise en œuvre par un serveur (3) ;
- une étape pour produire (310) par ledit serveur (3) un mot de contrôle chiffré $c$ dont le clair $k$ est destiné à être utilisé par des entités de traitement d'abonné pour décoder (210) ledit contenu encodé $C$;
- une étape pour transmettre au travers d'un réseau de distribution et à destination des entités de traitement d'abonné, lesdits contenu encodé $C$ et mot de contrôle chiffré $c$ ;
- une étape pour réceptionner par chaque entité de traitement d'abonné lesdits contenu encodé $C$ et mot de contrôle chiffré $c$ ;
- une étape pour produire (110) le clair $k$ d'un mot de contrôle par chaque entité de traitement d'abonné à partir du chiffré $c$ ;
- une étape pour décoder (210) par chaque entité de traitement d'abonné le contenu encodé $C$ et produire un contenu clair $M$ à partir d'une fonction de décodage et du clair $k$ ;
- une étape pour restituer ledit contenu clair $M$ au moyen d'une interface adaptée audit contenu clair ;

**caractérisé en ce que** :

- les étapes pour produire (310) et transmettre un mot de contrôle chiffré par le serveur de diffusion de contenus numériques protégés, ainsi que les étapes pour réceptionner et produire (110) le clair d'un mot de contrôle par les entités de traitement d'abonnés, sont celles d'un procédé sécurisé pour transmettre un mot de contrôle entre un serveur (3) et des entités de traitement (Ea, Eb, Em, Ei) conforme à l'une quelconque des revendications

$$t = C_{d_x+d_s-1}^{d_x} = \frac{(d_x+d_s-1)!}{d_x!(d_s-1)!} \, ,$$

1 à 7, de sorte que ledit procédé sécurisé résiste à des collusions de taille $d_s$ et $d_x$ étant deux entiers strictement supérieurs à 1 et respectivement exploités par lesdites étapes pour produire le chiffré ou le clair dudit mot de contrôle.

9. Procédé selon la revendication précédente, chaque entité de traitement (Ea, Eb, Em, Ei) consistant en un terminal (2a, 2b, 2m, 2i) et un dispositif sécurisé d'abonné (1a, 1b, 1m, 1i), ledit terminal et ledit dispositif sécurisé d'abonné étant couplés et mettant en œuvre respectivement le décodage d'un contenu encodé et la production du clair d'un mot de contrôle chiffré, ledit procédé étant **caractérisé en ce que** :

- l'étape pour réceptionner un contenu encodé $C$ et un mot de contrôle chiffré $c$ par une entité de traitement consiste à :

 i. réceptionner par le terminal le contenu encodé et le mot de contrôle chiffré ;
 ii. transmettre le mot de contrôle chiffré $c$ par le terminal au dispositif sécurisé d'abonnés coopérant avec ledit terminal ;

- l'étape pour produire (110) le clair $k$ d'un mot de contrôle par une entité de traitement consiste à produire celui-ci par le dispositif sécurisé d'abonné qui le délivre au terminal ;
- l'étape pour décoder (210) un contenu encodé $C$ consiste à mettre en œuvre par le terminal la fonction de décodage pour produire un contenu clair $M$ à partir du contenu encodé $C$ et dudit mot de contrôle $k$.

10. Serveur (3) d'un système d'accès conditionnel à un contenu numérique, ledit système comportant, outre ledit serveur (3), une pluralité d'entités de traitement (Ea, Eb, Em, Ei) en liaison avec ce dernier, ledit serveur (3) étant caractérisé, de sorte que ledit système mette en œuvre un procédé d'accès conditionnel selon les revendications 8 ou 9, en ce qu'il comporte :

- des moyens pour mémoriser une valeur secrète $\gamma$ appartenant à l'ensemble $\mathbb{Z}_p^*$ des entiers non nuls modulo $p$, $p$ étant un nombre premier, un groupe bilinéaire

$$\beta = (p, \mathbb{G}_1, \mathbb{G}_2, \mathbb{G}_T, e(.,.))$$

d'ordre $p$ où $e(.,.)$ est un couplage tel que

$$e : \mathbb{G}_1 \times \mathbb{G}_2 \to \mathbb{G}_T \, ,$$

$\mathbb{G}_1$, $\mathbb{G}_2$ et $\mathbb{G}_T$ étant des groupes cycliques d'ordre $p$ et un vecteur $s$ de $d_s$ éléments appartenant chacun à l'ensemble $\mathbb{Z}_p^*$, $d_s$ étant un entier strictement supérieur à 1 et petit au regard du nombre d'entités de traitement ;
- des moyens de traitement adaptés pour produire :

 i. un chiffré $c$ d'un mot de contrôle à partir du vecteur $s$, de la valeur secrète $\gamma$ et de deux générateurs appartenant respectivement aux groupes cycliques $\mathbb{G}_1$ et $\mathbb{G}_2$ conformément à l'étape (310) pour produire un tel chiffré $c$ d'un procédé sécurisé pour transmettre un mot de contrôle entre un serveur (3) et des entités de traitement (Ea, Eb, Em, Ei) selon l'une quelconque des revendications 1 à 8, ledit procédé étant résistant à des collusions d'une taille $t$ dont la valeur dépend de celle de l'entier $d_s$ ;
 ii. un contenu encodé $C$ à partir d'un contenu clair $M$ ;

- des moyens pour délivrer lesdits contenu encodé *C* et mot de contrôle chiffré *c* à la pluralité d'entités de traitement du système d'accès conditionnel.

11. Entité de traitement (Ea, Eb, Em, Ei) d'un système d'accès conditionnel, ledit système comportant, outre ladite entité de traitement (Ea, Eb, Em, Ei), un serveur (3) selon la revendication précédente en liaison avec cette dernière, ladite entité de traitement (Ea, Eb, Em, Ei) étant **caractérisée**, de sorte que ledit système mette en œuvre un procédé d'accès conditionnel selon les revendications 8 ou 9, en ce qu'elle comporte :

- des moyens pour mémoriser des paramètres publics comportant un groupe bilinéaire

$$\beta = (p, \mathbb{G}_1, \mathbb{G}_2, \mathbb{G}_T, e(.,.))$$

d'ordre *p* premier où *e*(.,.) est un couplage tel que

$$e : \mathbb{G}_1 \times \mathbb{G}_2 \to \mathbb{G}_T \; ,$$

$\mathbb{G}_1$, $\mathbb{G}_2$, $\mathbb{G}_T$ étant des groupes cycliques d'ordre *p*, ledit groupe bilinéaire étant connu du serveur (3) pour que ledit serveur (3) produise un mot de contrôle chiffré *c* à partir d'un vecteur *s* de $d_s$ éléments appartenant chacun à l'ensemble $\mathbb{Z}_p^*$, $d_s$ étant un entier strictement supérieur à 1, d'une valeur secrète $\gamma$ et de deux générateurs appartenant respectivement aux groupes cycliques $\mathbb{G}_1$ et $\mathbb{G}_2$ ;
- des moyens pour mémoriser une clé de déchiffrement dédiée $DK_i$ préalablement produite à partir :

    i. d'un vecteur $x^{(i)}$ de $d_x$ valeurs appartenant chacune à l'ensemble $\mathbb{Z}_p^*$ des entiers non nuls modulo *p*, $d_x$ étant un entier strictement supérieur à 1, le vecteur $x^{(i)}$ étant dédié à ladite entité de traitement (Ea, Eb, Em, Ei) ;
    ii. de la valeur secrète $\gamma$ connue du serveur (3) ;
    iii. d'un générateur appartenant à l'un des groupes cycliques du groupe bilinéaire $\beta$ ;

- des moyens de réception pour recevoir depuis le serveur (3) un contenu encodé *C* et le mot de contrôle chiffré *c* ;
- des moyens de traitement (10) adaptés pour produire un mot de contrôle clair *k* à partir desdites données et de la clé de déchiffrement $DK_i$, conformément à l'étape pour produire un mot de contrôle clair *k* d'un procédé sécurisé pour transmettre un mot de contrôle entre un serveur (3) et des entités de traitement (Ea, Eb, Em, Ei) résistant aux collusions selon l'une quelconque des revendications 1 à 7, ledit procédé étant résistant à des

$$t = C_{d_x + d_s - 1}^{d_x} = \frac{(d_x + d_s - 1)!}{d_x!(d_s - 1)!} \; ;$$

collusions d'une taille
- des moyens de traitement pour produire (210) un contenu clair *M* à partir desdites données et du mot de contrôle *k* ;
- des moyens pour délivrer ledit contenu clair à une interface homme-machine adaptée (5) pour restituer ledit contenu clair *M* .

12. Système d'accès conditionnel à un contenu numérique comportant une pluralité d'entités de traitement (Ea, Eb, Em, Ei) respectivement agencées selon la revendication 11, un serveur (3) agencé selon la revendication 10, ledit serveur étant en outre en liaison avec ladite pluralité d'entités de traitement (Ea, Eb, Em, Ei) de sorte que ledit système mettre en œuvre un procédé d'accès conditionnel selon les revendications 8 ou 9.

13. Entité de traitement (Ea, Eb, Em, Ei) selon la revendication 11, ladite entité de traitement consistant en un terminal (2a, 2b, 2m, 2i) et un dispositif sécurisé d'abonné (1a, 1b, 1m, 1i) coopérant avec ce dernier, ledit terminal comportant :

- les moyens de réception pour recevoir les données depuis le monde extérieur ;
- des moyens pour transmettre au dispositif sécurisé d'abonné le mot de contrôle chiffré *c* et réceptionner en retour le mot de contrôle clair *k ;*
- les moyens de traitement pour produire (210) le contenu clair *M ;*
- les moyens pour délivrer ledit contenu clair à une interface homme-machine adaptée pour restituer ledit contenu clair ;

ledit dispositif électronique d'abonné (1a, 1b, 1m, 1i) comportant :

- des moyens de réception pour recevoir le mot de contrôle chiffré *c* depuis le terminal ;
- les moyens de mémorisation pour mémoriser les paramètres publics ;
- les moyens de mémorisation pour mémoriser une clé de déchiffrement dédiée *DK_i ;*
- les moyens de traitement pour produire (110) le mot de contrôle *k* à partir dudit chiffré *c* et de la clé *DK_i ;*
- des moyens pour délivrer ledit mot de contrôle audit terminal.

## Patentansprüche

1. Gesichertes Verfahren zum Übertragen eines Steuerworts zwischen einem Server (3) und Verarbeitungseinheiten (Ea, Eb, Em, Ei) jeweils zum Erzeugen und Nutzen des genannten Steuerworts, wobei das genannte Verfahren Folgendes beinhaltet:

- einen Schritt zum Erzeugen (310), durch den Server (3), eines verschlüsselten Steuerworts *c,* dessen Klartext *k* zur Nutzung durch die genannten Verarbeitungseinheiten (Ea, Eb, Em, Ei) bestimmt ist;
- einen Schritt zum Übertragen des erzeugten verschlüsselten Steuerworts *c* zu den Verarbeitungseinheiten (Ea, Eb, Em, Ei);
- einen Schritt zum Empfangen des verschlüsselten Steuerworts *c* durch die genannten Verarbeitungseinheiten (Ea, Eb, Em, Ei);
- einen Schritt zum Erzeugen (110) eines Klartext-Steuerworts *k* durch jede Verarbeitungseinheit (Ea, Eb, Em, Ei) auf der Basis des empfangenen verschlüsselten Steuerworts *c;*

**dadurch gekennzeichnet, dass**:

- der Schritt zum Erzeugen (310), durch den Server (3), eines verschlüsselten Steuerworts *c* darin besteht, dieses zu erzeugen aus:

  i. einem Vektor *s* mit $d_s$ Elementen, die jeweils zur Menge $\mathbb{Z}_p^*$ von ganzen Zahlen ungleich null modulo *p* gehören, wobei *p* eine Primzahl ist, wobei $d_s$ eine ganze Zahl strikt größer als 1 und klein in Bezug auf die Anzahl von Verarbeitungseinheiten (Ea, Eb, Em, Ei) ist;

  ii. einem geheimen Wert *γ,* der dem Server bekannt ist und zur Menge $\mathbb{Z}_p^*$ der ganzen Zahlen ungleich null modulo *p* gehört;

  iii. zwei Generatoren, die jeweils zu zwei zyklischen Gruppen $\mathbb{G}_1$ und $\mathbb{G}_2$ der Ordnung *p* gehören, Parameter einer bilinearen Gruppe

$$\beta \;=\; (\mathrm{p},\; \mathbb{G}_1,\; \mathbb{G}_2,\; \mathbb{G}_T, e(.,.))$$

der Ordnung *p*, wobei *e*(.,.) eine solche Kopplung ist, dass

$$e: \mathbb{G}_1 \;\; \mathrm{x} \;\; \mathbb{G}_2 \;\rightarrow\; \mathbb{G}_T$$

ist, wobei $\mathbb{G}_T$ eine dritte zyklische Gruppe der Ordnung p ist;

- der Schritt zum Erzeugen (110) eines Klartext-Steuerworts *k* durch jede Verarbeitungseinheit (Ea, Eb, Em, Ei) darin besteht, dieses zu erzeugen aus:

    i. dem verschlüsselten Steuerwort *c*;

    ii. einem Entschlüsselungsschlüssel $DK_i$, der der i-ten Verarbeitungseinheit bekannt und vorab erzeugt ist aus:

        a) einem Vektor $x^{(i)}$ mit $d_x$ Elementen, die jeweils zur Menge $\mathbb{Z}^*_p$ von ganzen Zahlen ungleich null modulo *p* gehören, wobei $d_x$ eine ganze Zahl strikt größer als 1 und klein in Bezug auf die Anzahl von Verarbeitungseinheiten (Ea, Eb, Em, Ei) ist, wobei der Vektor $x^{(i)}$ für die betreffende Verarbeitungseinheit dediziert ist;

        b) dem geheimen Wert $\gamma$;

        c) einem Generator, der zu einer der zyklischen Gruppen der bilinearen Gruppe $\beta$ gehört;

        so dass der erzeugte Entschlüsselungsschlüssel $DK_i$ aus solchen Komponenten besteht, dass $DK_i$ = $(x^{(i)}, A_i)$ ist, wobei $A_i$ eine Komponente der Form $z^{\frac{1}{P(\gamma)}}$ ist, wobei z ein Generator ist, der zu einer der zyklischen Gruppen der bilinearen Gruppe $\beta$ gehört, und wobei P ein Polynom in $\gamma$ vom Grad $d_x$ ist, das auf der Basis von $x^{(i)}$ erzeugt wird;

- das Erzeugen des Entschlüsselungsschlüssels $DK_i$, der Schritt (310) des Erzeugens des verschlüsselten Steuerwortes *c* und der Schritt (110) des Erzeugens des Klartext-Steuerworts *k* sind so zueinander ausgelegt, dass ein White-Box-Tracing-Verfahren unter Nutzung des geheimen Wertes $\gamma$ und mehrerer Klartext-Steuerwörter *k,* die durch ein Entschlüsselungsverfahren erzeugt wurden, das gemeinsam eine Anzahl von kompromittierten Entschlüsselungsschlüsseln $DK_i$ ausnutzt, wobei diese Anzahl gleich oder kleiner als $t = C^{d_x}_{d_x+d_s-1} = \frac{(d_x+d_s-1)!}{d_x!(d_s-1)!}$ ist, mindestens einen Vektor $x^{(i)}$ erzeugt, der zum Erzeugen eines der genannten Entschlüsselungsschlüssel $DK_i$ genutzt wird, wobei der genannte so erzeugte Vektor $x^{(i)}$ einen der genannten kompromittierten Entschlüsselungsschlüssel $DK_i$ identifiziert.

**2.** Verfahren nach dem vorherigen Anspruch, das vorab Folgendes beinhaltet:

- einen Schritt zum Ausarbeiten (300) eines geheimen Hauptschlüssels *MK*, der die geheime Komponente $\gamma$ umfasst, die mit öffentlichen Parametern einschließlich der bilinearen Gruppe $\beta$ assoziiert ist;
- einen Schritt zum Speichern des genannten Schlüssels *MK* und der öffentlichen Parameter innerhalb des Servers;
- einen Schritt zum Speichern (100) der genannten öffentlichen Parameter innerhalb jeder Verarbeitungseinheit;
- einen Schritt zum Erzeugen (301), Übertragen und Registrieren (101) der dedizierten bzw. unterschiedlichen Entschlüsselungsschlüssel $DK_i$ innerhalb der Verarbeitungseinheiten.

**3.** Verfahren nach Anspruch 2, **dadurch gekennzeichnet, dass**:

- das genannte Verfahren Folgendes beinhaltet:

    i. einen Schritt zum Auswählen von zwei Generatoren *g* und *h*, die jeweils zu den zyklischen Gruppen $\mathbb{G}_1$ und $\mathbb{G}_2$ gehören;

    ii. einen Schritt zum Erzeugen als öffentliche Parameter - neben $\beta$ und *h* - der Komponenten $g^\gamma$, $g^{\gamma^2}$, ..., $g^{\gamma^{ds-1}}$, $h^\gamma$, $h^{\gamma^2}$ ..., $h^{\gamma^{dx-1}}$;

- der geheime Schlüssel *MK* aus $\gamma$ und *g* besteht;

- der Schritt zum Erzeugen (301) eines Entschlüsselungsschlüssels $DK_i$ darin besteht, den genannten Schlüssel als Resultat von zwei Komponenten zu erzeugen, so dass $Dk_i=(x^{(i)},A_i)$, wobei $A_i = g^{\frac{1}{P(\gamma)}}$ mit

$$P(\gamma)=\left(\gamma+x_1^{(i)}\right)\cdot\left(\gamma+x_2^{(i)}\right)\cdots\left(\gamma+x_{d_x}^{(i)}\right) \;;$$

- der Schritt zum Erzeugen (310) des verschlüsselten Steuerworts darin besteht, das genannte Wort als Resultat aus zwei Komponenten zu erzeugen, so dass $c = \left( s, h^{\frac{1}{Q(\gamma)}} \right)$ mit $Q(\gamma)=(\gamma+s_1)\cdot(\gamma+s_2)\cdots(\gamma+s_{d_s})$ ;

- der Schritt zum Erzeugen (110) des Klartext-Steuerworts $k$ darin besteht, $k$ so zu berechnen, dass

$$k=e\left( g^{\alpha}, h^{\frac{1}{Q(\gamma)}} \right)\cdot e\left(A_i, h^{\xi}\right)\cdot e\left(A_i, h^{\frac{1}{Q(\gamma)}}\right)^{\theta}$$ , wobei $\alpha = 1 - \dfrac{\sum_{l=1}^{d_s}\dfrac{Q_l(\gamma)}{R_l(-s_l)}}{\sum_{l=1}^{d_s}\dfrac{\prod_{j\neq l}^{d_s}s_j}{R_l(-s_l)}}$ , und $\xi = -\dfrac{\sum_{l=1}^{d_x}\dfrac{P_l(\gamma)}{R_{l+ds}(-s_l)}}{\sum_{l=1}^{d_s}\dfrac{\prod_{j\neq l}^{d_s}s_j}{R_l(-s_l)}}$

$$Q_l(\gamma)=\prod_{\substack{j=1\\j\neq l}}^{d_s}\left(s_j+\gamma\right) , \qquad P_l(\gamma)=\prod_{\substack{q=1\\q\neq l}}^{d_x}\left(x_q^{(i)}+\gamma\right) , \qquad R_l(\gamma)=\prod_{\substack{j=1\\j\neq l}}^{d_s+d_x}\left(s_j+\gamma\right)$$

mit und

$$s_{d_s+m} = x_m^{(i)} \text{ für } m = 1,...,d_x.$$

4. Verfahren nach Anspruch 2, **dadurch gekennzeichnet, dass**:

- das genannte Verfahren einen Schritt zum Auswählen von zwei Generatoren $g$ und $h$ beinhaltet, die zu den

Gruppen $\mathbb{G}_1$ bzw. $\mathbb{G}_2$ gehören;
- die öffentlichen Parameter aus $\beta$ bestehen;
- der geheime Schlüssel $MK$ aus $\gamma$ und $g$ besteht;
- der Schritt zum Erzeugen (301) eines Entschlüsselungsschlüssels $DK_i$ darin besteht, den genannten Schlüssel als Resultat von zwei Komponenten zu erzeugen, so dass $DK_i = (A_i, B^{(i)})$, wobei $A_i = g^{\sum_{j=1}^{d_x}\frac{x_j^{(i)}}{\gamma+x_j^{(i)}}}$ und der

$$B^{(i)} = \left(B_1^{(i)}, x_1^{(i)}\right), \left(B_2^{(i)}, x_2^{(i)}\right),...,\left(B_{d_x}^{(i)}, x_{d_x}^{(i)}\right)$$

$$= \left(h^{\frac{1}{\gamma+x_1^{(i)}}}, x_1^{(i)}\right), \left(h^{\frac{1}{\gamma+x_2^{(i)}}}, x_2^{(i)}\right),...,\left(h^{\frac{1}{\gamma+x_{d_x}^{(i)}}}, x_{d_x}^{(i)}\right) \;;$$

Vektor $B^{(i)}$ mit $d_x$ Elementen derart ist, dass
- der Schritt zum Erzeugen (310) des verschlüsselten Steuerworts darin besteht, das genannte Wort als Resultat von 4 Komponenten zu erzeugen, so dass $c = W_1, W_2, s, U)$ mit Vektor $U$ von $d_s$ Werten, so dass

$$U_1 = h^{\frac{1}{\gamma+s_1}}, U_2 = h^{\frac{1}{(\gamma+s_1)\cdot(\gamma+s_2)}},...,U_{d_s} = h^{\frac{1}{(\gamma+s_1)...(\gamma+s_{d_s})}} , \qquad W_1 = \left(g^{\gamma}\right)^m ,$$

$$W_2 = h^{\frac{m}{(\gamma+s_1)...(\gamma+s_{d_s})}} = U_{d_s}^m , \text{ wobei } m \text{ eine ganze Zahl ist;}$$

- der Schritt zum Erzeugen (110) des Klartext-Steuerworts $k$ darin besteht, $k$ so zu berechnen, dass

$$k = e\left(g^{\gamma}, \prod_{j=1}^{d_x}\left(B_j^{(i)}\right)^{\frac{1}{\prod_{l=1}^{d_s}(\gamma+s_l)}}\right) \cdot e\left(A_i, W_2\right)$$

wobei

$$\prod_{j=1}^{d_x}\left(B_j^{(i)}\right)^{\frac{1}{\prod_{l=1}^{d_s}(\gamma+s_l)}} = \prod_{j=1}^{d_x}\left(B_j^{(i)} \cdot \prod_{y=1}^{d_s} U_y^{(-1)^{j+d_s}\cdot\prod_{n=1}^{y-1}\left(x_j^{(i)}-s_n\right)}\right)^{\frac{1}{\prod_{l=1}^{d_s}\left(x_j^{(i)}-s_l\right)}}.$$

5. Verfahren nach dem vorherigen Anspruch, **dadurch gekennzeichnet, dass** es einen Schritt zum Erzeugen von Widerrufsdaten $D_{\Re}$ beinhaltet, so dass $D_{\Re} = \left(R_1,...,R_r\right)$ mit $R_1 = h^{\frac{1}{\gamma+x_j^{(1)}}}$, $R_2 = h^{\frac{1}{\left(\gamma+x_j^{(1)}\right)\cdot\left(\gamma+x_j^{(2)}\right)}}$,...,

$$R_r = h^{\frac{1}{\left(\gamma+x_j^{(1)}\right)\cdots\left(\gamma+x_j^{(r)}\right)}}$$

, und dadurch, dass der Generator $h$ vor der Durchführung des Schritts zum Erzeugen (310) des verschlüsselten Steuerworts den Wert $R_r$ annimmt.

6. Verfahren nach dem vorherigen Anspruch, **dadurch gekennzeichnet, dass** es einen Schritt zum Modifizieren des Wertes des Entschlüsselungsschlüssels vor der Durchführung des Schrittes zum Erzeugen (110) des Klartexts eines Steuerworts beinhaltet, wobei der genannte Schlüssel einen Wert $DK_{i,\Re} = \left(A_i, B^{(i,\Re)}\right)$ mit

$$B_j^{(i,\Re)} = \left(B_j^{(i)}\right)^{\frac{1}{\prod_{j=1}^{r}\left(\gamma+x_w^{(l)}\right)}} = \left(B_j^{(i)} \cdot \prod_{m=1}^{r} R_m^{(-1)^{i+r}\cdot\prod_{n=1}^{m-1}\left(x_j^{(i)}-x_w^{(m)}\right)}\right)^{\frac{1}{\prod_{j=1}^{r}\left(\gamma-x_w^{(l)}\right)}}$$

für einen gegebenen Wert von $w \in [1,d_x]$ annimmt.

7. Verfahren nach Anspruch 5, **dadurch gekennzeichnet, dass** die Chiffre ferner $D_{\Re}$ und $x_j^{(1)},...,x_j^{(r)}$ für einen gewählten Wert von $j \in [1,d_x]$ umfasst, und dadurch, dass der Schritt zum Erzeugen (110) von $k$ ausgelegt ist zum

$$k = e\left(g^{\gamma}, \prod_{j=1}^{d_x}\left(B_j^{(i,\Re)}\right)^{\frac{1}{\prod_{l=1}^{d_s}(\gamma+s_l)}}\right) \cdot e\left(A_i, W_2\right)$$

Erzeugen des Klartexts eines Steuerworts, so dass

wobei

$$\prod_{j=1}^{d_x}\left(B_j^{(i,\Re)}\right)^{\frac{1}{\prod_{l=1}^{d_s}(\gamma+s_l)}} = \prod_{j=1}^{d_x}\left(B_j^{(i)} \cdot \prod_{y=1}^{r} U_y^{(-1)^{i+r}\cdot\prod_{n=1}^{y-1}\left(x_j^{(i)}-s_n\right)}\right)^{\frac{1}{\prod_{l=1}^{r}\left(x_j^{(i)}-s_l\right)}}.$$

8. Verfahren zum konditionellen Zugreifen auf einen digitalen Inhalt, das Folgendes beinhaltet:

- einen Schritt zum Codieren eines digitalen Inhalts $M$ und zum Erzeugen eines codierten Inhalts $C$ mittels einer von einem Server (3) implementierten Codierfunktion;
- einen Schritt zum Erzeugen (310), durch den genannten Server (3), eines verschlüsselten Steuerworts $c$, dessen Klartext $k$ zur Nutzung durch Teilnehmerverarbeitungseinheiten zum Decodieren (210) des genannten codierten Inhalts $C$ bestimmt ist;

- einen Schritt zum Übertragen des genannten codierten Inhalts *C* und des genannten verschlüsselten Steuerworts *c* durch ein Verteilungsnetz und zu den Teilnehmerverarbeitungseinheiten;
- einen Schritt zum Empfangen, durch jede Teilnehmerverarbeitungseinheit, des genannten codierten Inhalts *C* und des genannten verschlüsselten Steuerworts *c;*
- einen Schritt zum Erzeugen (110) des Klartexts *k* eines Steuerworts durch jede Teilnehmerverarbeitungseinheit auf der Basis der Chiffre *c;*
- einen Schritt zum Decodieren (210), durch jede Teilnehmerverarbeitungseinheit, des codierten Inhalts *C* und zum Erzeugen eines Klartextinhalts *M* auf der Basis einer Decodierfunktion und des Klartexts *k;*
- einen Schritt zum Ausgeben des genannten Klartextinhalts *M* mittels einer an den genannten Klartextinhalt angepassten Schnittstelle;

**dadurch gekennzeichnet, dass**:

- die Schritte zum Erzeugen (310) und Übertragen eines verschlüsselten Steuerworts durch den Server zum Verteilen von geschützten digitalen Inhalten sowie die Schritte zum Empfangen und Erzeugen (110) des Klartexts eines Steuerworts durch die Teilnehmerverarbeitungseinheiten die eines gesicherten Verfahrens zum Übertragen eines Steuerworts zwischen einem Server (3) und Verarbeitungseinheiten (Ea, Eb, Em, Ei) nach einem der Ansprüche 1 bis 7 sind, so dass das genannte gesicherte Verfahren Kollusionen der Größe

$$t = C_{d_x + d_s - 1}^{d_x} = \frac{(d_x + d_s - 1)!}{d_x!(d_s - 1)!}$$ widersteht, wobei $d_s$ und $d_x$ zwei ganze Zahlen strikt größer als 1 sind und jeweils von den genannten Schritten zum Erzeugen der Chiffre oder des Klartexts des genannten Steuerworts genutzt werden.

9. Verfahren nach dem vorherigen Anspruch, wobei jede Verarbeitungseinheit (Ea, Eb, Em, Ei) aus einem Endgerät (2a, 2b, 2m, 2i) und einem gesicherten Teilnehmergerät (1a, 1b, 1m, 1i) besteht, wobei das genannte Endgerät und das genannte gesicherte Teilnehmergerät gekoppelt sind und jeweils die Decodierung eines codierten Inhalts und die Erzeugung des Klartexts eines verschlüsselten Steuerworts durchführen, wobei das genannte Verfahren **dadurch gekennzeichnet ist, dass**:

- der Schritt zum Empfangen eines codierten Inhalts *C* und eines verschlüsselten Steuerworts *c* durch eine Verarbeitungseinheit besteht im:

  i. Empfangen des codierten Inhalts und des verschlüsselten Steuerworts durch das Endgerät;
  ii. Übertragen des verschlüsselten Steuerworts *c* durch das Endgerät zu dem gesicherten Teilnehmergerät, das mit dem genannten Endgerät zusammenarbeitet;

- der Schritt zum Erzeugen (110) des Klartexts *k* eines Steuerworts durch eine Verarbeitungseinheit darin besteht, dass es von dem gesicherten Teilnehmergerät erzeugt wird, das es an das Endgerät liefert;
- der Schritt zum Decodieren (210) eines codierten Inhalts *C* darin besteht, dass das Endgerät die Decodierfunktion ausführt, um einen Klartextinhalt *M* auf der Basis des codierten Inhalts *C* und des genannten Steuerworts *k* zu erzeugen.

10. Server (3) eines Systems zum konditionellen Zugreifen auf einen digitalen Inhalt, wobei das genannte System zusätzlich zu dem genannten Server (3) mehrere Verarbeitungseinheiten (Ea, Eb, Em, Ei) in Verbindung mit diesem umfasst, wobei der genannte Server (3) - derart, dass das genannte System ein konditionelles Zugriffsverfahren nach Anspruch 8 oder 9 implementiert - **dadurch gekennzeichnet ist, dass** es Folgendes umfasst:

- Mittel zum Speichern eines geheimen Wertes $\gamma$, der zu der Menge $\mathbb{Z}_p^*$ von ganzen Zahlen ungleich null modulo *p* gehört, wobei *p* eine Primzahl ist, eine bilineare Gruppe $\beta$ = (*p,*

$$\mathbb{G}_1, \ \mathbb{G}_2, \ \mathbb{G}_T, e(.,.))$$

der Ordnung *p,* wobei *e*(.,.) eine solche Kopplung ist, dass

$$e: \mathbb{G}_1 \quad \mathrm{x} \quad \mathbb{G}_2 \quad \rightarrow \quad \mathbb{G}_T,$$

wobei $\mathbb{G}_1$, $\mathbb{G}_2$ und $\mathbb{G}_T$ zyklische Gruppen der Ordnung $p$ sind und ein Vektor $s$ mit $d_s$ Elementen, die jeweils zur Menge $\mathbb{Z}^*_p$ gehören, wobei $d_s$ eine ganze Zahl strikt größer als 1 und klein in Bezug auf die Anzahl der Verarbeitungseinheiten ist;
- Verarbeitungsmittel, ausgelegt zum Erzeugen:

    i. einer Chiffre $c$ eines Steuerworts auf der Basis des Vektors $s$, des geheimen Wertes $\gamma$ und von zwei Generatoren, die jeweils zu den zyklischen Gruppen $\mathbb{G}_1$ und $\mathbb{G}_2$ gehören, gemäß Schritt (310) zum Erzeugen einer solchen Chiffre $c$ eines gesicherten Verfahrens zum Übertragen eines Steuerworts zwischen einem Server (3) und Verarbeitungseinheiten (Ea, Eb, Em, Ei) nach einem der Ansprüche 1 bis 8, wobei das genannte Verfahren Kollusionen einer Größe $t$ widersteht, deren Wert von dem der ganzen Zahl $d_s$ abhängt;
    ii.eines auf der Basis eines Klartextinhalts $M$ verschlüsselten Inhalts $C$;

- Mittel zum Liefern des genannten codierten Inhalts C und des genannten verschlüsselten Steuerworts c an die mehreren Verarbeitungseinheiten des konditionellen Zugriffssystems.

11. Verarbeitungseinheit (Ea, Eb, Em, Ei) eines konditionellen Zugriffssystems, wobei das genannte System zusätzlich zu der genannten Verarbeitungseinheit (Ea, Eb, Em, Ei) einen Server (3) nach dem vorherigen Anspruch in Verbindung mit diesem umfasst, wobei die genannte Verarbeitungseinheit (Ea, Eb, Em, Ei) - derart, dass das genannte System ein konditionelles Zugriffsverfahren nach Anspruch 8 oder 9 implementiert - **dadurch gekennzeichnet ist, dass** es Folgendes beinhaltet:

- Mittel zum Speichern öffentlicher Parameter, die eine bilineare Gruppe

$$\beta = (p, \mathbb{G}_1, \mathbb{G}_2, \mathbb{G}_T, e(.,.))$$

der Primzahlordnung $p$ umfassen, wobei $e(.,.)$ eine solche Kopplung ist, dass

$$e: \mathbb{G}_1$$

$$\mathrm{x} \quad \mathbb{G}_2 \quad \rightarrow \quad \mathbb{G}_T,$$

wobei $\mathbb{G}_1$, $\mathbb{G}_2$, $\mathbb{G}_T$ zyklische Gruppen der Ordnung $p$ sind, wobei die genannte bilineare Gruppe dem Server (3) bekannt ist, so dass der genannte Server (3) ein verschlüsseltes Steuerwort $c$ auf der Basis eines Vektors $s$ mit $d_s$ Elementen, die jeweils zur Menge $\mathbb{Z}^*_p$ gehören, wobei $d_s$ eine ganze Zahl strikt größer als 1 ist, eines geheimen Werts $\gamma$ und von zwei Generatoren erzeugt, die jeweils zu den zyklischen Gruppen $\mathbb{G}_1$ und $\mathbb{G}_2$ gehören;
- Mittel zum Speichern eines dedizierten Entschlüsselungsschlüssels $DK_i$, vorab erzeugt aus:

    i. einem Vektor $x^{(i)}$ von $d_x$ Werten, die jeweils zur Menge $\mathbb{Z}^*_p$ von ganzen Zahlen ungleich null modulo $p$ gehören, wobei $d_x$ eine ganze Zahl strikt größer als 1 ist, wobei der Vektor $x^{(i)}$ für die genannte Verarbeitungseinheit (Ea, Eb, Em, Ei) dediziert ist;
    ii.dem dem Server (3) bekannten geheimen Wert $\gamma$;
    iii. einem Generator, der zu einer der zyklischen Gruppen der bilinearen Gruppe $\beta$ gehört;

- Empfangsmittel, um vom Server (3) einen codierten Inhalt *C* und das verschlüsselte Steuerwort *c* zu empfangen;
- Verarbeitungsmittel (10), ausgelegt zum Erzeugen eines Klartext-Steuerworts *k* auf der Basis der genannten Daten und des Entschlüsselungsschlüssels *DK$_i$* gemäß dem Schritt zum Erzeugen eines Klartext-Steuerworts *k* eines gesicherten Verfahrens zum Übertragen eines Steuerworts zwischen einem Server (3) und Verarbeitungseinheiten (Ea, Eb, Em, Ei), das Kollusionen nach einem der Ansprüche 1 bis 7 widersteht, wobei das

$$t = C_{d_x+d_s-1}^{d_x} = \frac{(d_x + d_s - 1)!}{d_x!(d_s - 1)!}$$

genannte Verfahren Kollusionen einer Größe widersteht;
- Verarbeitungsmittel zum Erzeugen (210) eines Klartextinhalts *M* auf der Basis der genannten Daten und des Steuerworts *k*;
- Mittel zum Liefern des genannten Klartextinhalts an eine Mensch-Maschine-Schnittstelle (5), ausgelegt zum Ausgeben des genannten Klartextinhalts *M*.

12. System zum konditionellen Zugreifen auf einen digitalen Inhalt, umfassend mehrere Verarbeitungseinheiten (Ea, Eb, Em, Ei) jeweils ausgelegt gemäß Anspruch 11, einen Server (3) ausgelegt gemäß Anspruch 10, wobei der genannte Server ferner mit den genannten mehreren Verarbeitungseinheiten (Ea, Eb, Em, Ei) in Verbindung steht, so dass das genannte System ein konditionelles Zugriffsverfahren nach Anspruch 8 oder 9 implementiert.

13. Verarbeitungseinheit (Ea, Eb, Em, Ei) nach Anspruch 11, wobei die genannte Verarbeitungseinheit aus einem Endgerät (2a, 2b, 2m, 2i) und einem mit diesem zusammenarbeitenden gesicherten Teilnehmergerät (1a, 1b, 1m, 1i) besteht, wobei das genannte Endgerät Folgendes umfasst:

- Empfangsmittel zum Empfangen der Daten von der Außenwelt;
- Mittel zum Übertragen des verschlüsselten Steuerworts *c* zu dem gesicherten Teilnehmergerät und zum Zurückempfangen des Klartext-Steuerworts *k*;
- die Verarbeitungsmittel zum Erzeugen (210) des Klartextinhalts *M*;
- die Mittel zum Liefern des genannten Klartextinhalts an eine Mensch-Maschine-Schnittstelle, ausgelegt zum Ausgeben des genannten Klartextinhalts;

wobei das genannte elektronische Teilnehmergerät (1a, 1b, 1m, 1i) Folgendes umfasst:

- Empfangsmittel zum Empfangen des verschlüsselten Steuerworts *c* vom Endgerät;
- die Speichermittel zum Speichern der öffentlichen Parameter;
- die Speichermittel zum Speichern eines dedizierten Entschlüsselungsschlüssels *DK$_i$;*
- die Verarbeitungsmittel zum Erzeugen (110) des Steuerworts *k* auf der Basis der genannten Chiffre *c* und des Schlüssels *DK$_i$;*
- Mittel zum Liefern des genannten Steuerworts an das genannte Endgerät.

**Claims**

1. Secure method for transmitting a control word between a server (3) and processing entities (Ea, Eb, Em, Ei) for respectively producing and using said control word, said method comprising:

- a step for producing (310), by the server (3), an encrypted control word *c* the plaintext *k* of which is intended to be used by said processing entities (Ea, Eb, Em, Ei);
- a step for transmitting the encrypted control word c produced, to the processing entities (Ea, Eb, Em, Ei);
- a step for receiving, by said processing entities (Ea, Eb, Em, Ei), the encrypted control word *c;*
- a step for producing (110) a plaintext control word *k*, by each processing entity (Ea, Eb, Em, Ei), from the encrypted control word *c* received;

**characterized in that**:

- the step for producing (310), by the server (3), an encrypted control word *c*, consists of producing the latter from:

i. a vector *s* of $d_s$ elements each belonging to the set $\mathbb{Z}^*_p$ of the non-zero integers modulo *p*, *p* being a prime number, $d_s$ being an integer strictly greater than 1 and small with respect to the number of processing entities (Ea, Eb, Em, Ei);

ii. a secret value $\gamma$ known to the server and belonging to the set $\mathbb{Z}^{*}_{p}$ of the non-zero integers modulo $p$;

iii. two generators belonging respectively to two cyclic groups $\mathbb{G}_1$ and $\mathbb{G}_2$ of order $p$, parameters of a bilinear group

$$\beta = (p, \mathbb{G}_1, \mathbb{G}_2, \mathbb{G}_T,$$

of order $p$ where $e(.,.)$ is a coupling such that

$$e: \mathbb{G}_1 \; \times \; \mathbb{G}_2 \; \to \; \mathbb{G}_T,$$

$\mathbb{G}_T$ being a third cyclic group of order p;

- the step for producing (110) a plaintext control word $k$ by each processing entity (Ea, Eb, Em, Ei) consists of producing the latter from:

    i. the encrypted control word $c$;
    ii. a decryption key $DK_i$ known to the ith processing entity and produced beforehand from:

        a) a vector $x^{(i)}$ of $d_x$ elements each belonging to the set $\mathbb{Z}^{*}_{p}$ of non-zero integers modulo $p$, $d_x$ being an integer strictly greater than 1 and small with respect to the number of processing entities (Ea, Eb, Em, Ei), the vector $x^{(i)}$ being dedicated to the processing entity concerned;
        b) the secret value $\gamma$;
        c) a generator belonging to one of the cyclic groups of the bilinear group $\beta$;
        so that the decryption key $DK_i$, produced comprises components such that $DK_i = (x^{(i)}, A_i)$ where $A_i$, is a component in the form $z^{\frac{1}{P(\gamma)}}$, $z$ being a generator belonging to one of the cyclic groups of the bilinear group $\beta$ and $P$ being a $\gamma$ polynomial of degree $d_x$ produced from $x^{(i)}$;

- producing the decryption key $DK_i$, step (310) of producing the encrypted control word $c$ and step (110) of producing the plaintext control word $k$ are mutually arranged so that a white-box tracing method, utilizing the secret value $\gamma$ and a plurality of plaintext control words $k$ produced by a decryption method jointly utilizing a number of compromised decryption keys $DK_i$, this number being less than or equal to

$$t = C^{d_x}_{d_x+d_s-1} = \frac{(d_x+d_s-1)!}{d_x!(d_s-1)!}$$

, produces at least one vector $x^{(i)}$ utilized for producing one of said decryption keys $DK_i$, said vector $x^{(i)}$ thus produced identifying one of said compromised decryption keys $DK_i$.

2. Method according to the preceding claim, comprising beforehand:

    - a step for preparing (300) a secret master key $MK$ comprising the secret component $\gamma$ associated with public parameters including the bilinear group $\beta$;
    - a step for storing said key $MK$ and the public parameters within the server;
    - a step for storing (100) said public parameters within each processing entity;
    - a step for producing (301), transmitting and saving (101) the dedicated and distinct decryption keys $DK_i$ respectively within the processing entities.

3. Method according to claim 2, **characterized in that**:

- said method comprises:

i. a step for choosing *g* and *h* two generators belonging respectively to the cyclic groups $\mathbb{G}_1$ and $\mathbb{G}_2$;

ii. a step for producing as public parameters - apart from $\beta$ and *h,* the components $g^\gamma$, $g^{\gamma 2}$, ..., $g^{\gamma^{d_s-1}}$ , $h^\gamma$, $h^{\gamma 2}$ ..., $h^{\gamma^{d_x-1}}$ ;

- the secret key *MK* consists of $\gamma$ and *g;*
- the step for producing (301) a decryption key $DK_i$ consists of producing said key as resultant of two components

such 1 that $DK_i = (x^{(i)}, A_i)$ where $A_i = g^{\frac{1}{P(\gamma)}}$ with $P(\gamma) = \left(\gamma + x_1^{(i)}\right) \cdot \left(\gamma + x_2^{(i)}\right) \cdots \left(\gamma + x_{d_x}^{(i)}\right)$ ;

- the step for producing (310) the encrypted control word consists of producing said word as resultant of two components such that $c = \left( s, h^{\frac{1}{Q(\gamma)}} \right)$ with

$$Q(\gamma) = \left(\gamma + s_1\right) \cdot \left(\gamma + s_2\right) \cdots \left(\gamma + s_{d_s}\right) ;$$

- the step for producing (110) the plaintext control word *k* consists of calculating *k* such that

$$k = e\left( g^\alpha, h^{\frac{1}{Q(\gamma)}} \right) \cdot e\left( A_i, h^\xi \right) \cdot e\left( A_i, h^{\frac{1}{Q(\gamma)}} \right)^\theta \qquad \theta = \frac{1}{\sum_{l=1}^{d_s} \frac{\prod_{j \neq l}^{d_s} s_j}{R_l(-s_l)}} \quad , \quad \alpha = 1 - \frac{\sum_{l=1}^{d_s} \frac{Q_l(\gamma)}{R_l(-s_l)}}{\sum_{l=1}^{d_s} \frac{\prod_{j \neq l}^{d_s} s_j}{R_l(-s_l)}}$$

where and

$$\xi = -\frac{\sum_{l=1}^{d_x} \frac{P_l(\gamma)}{R_{l+ds}(-s_l)}}{\sum_{l=1}^{d_s} \frac{\prod_{j \neq l}^{d_s} s_j}{R_l(-s_l)}} \qquad Q_l(\gamma) = \prod_{\substack{j=1 \\ j \neq l}}^{d_s} \left(s_j + \gamma\right), \quad P_l(\gamma) = \prod_{\substack{q=1 \\ q \neq l}}^{d_x} \left(x_q^{(i)} + \gamma\right), \quad R_l(\gamma) = \prod_{\substack{j=1 \\ j \neq l}}^{d_s+d_x} \left(s_j + \gamma\right)$$

with

and $s_{d_s+m} = x_m^{(i)}$ for *m = 1,..,$d_x$.*

4. Method according to claim 2, **characterized in that**:

- said method comprises a step for choosing *g* and *h* two generators belonging respectively to the groups $\mathbb{G}_1$ and $\mathbb{G}_2$;
- the public parameters consist of $\beta$;
- the secret key *MK* consists of $\gamma$ and *g;*

- the step for producing (301) a decryption key $DK_i$ consists of producing said key as resultant of two components

such that $DK_i=(A_i,B^{(i)})$ where $A_i = g^{\sum_{j=1}^{d_x} \frac{x_j^{(i)}}{\gamma+x_j^{(i)}}}$ and the vector $B^{(i)}$ of $d_x$ elements such that

$$B^{(i)} = \left( B_1^{(i)}, x_1^{(i)} \right), \left( B_2^{(i)}, x_2^{(i)} \right), ..., \left( B_{d_x}^{(i)}, x_{d_x}^{(i)} \right)$$

$$= \left( h^{\frac{1}{\gamma+x_1^{(i)}}}, x_1^{(i)} \right), \left( h^{\frac{1}{\gamma+x_2^{(i)}}}, x_2^{(i)} \right), ..., \left( h^{\frac{1}{\gamma+x_{d_x}^{(i)}}}, x_{d_x}^{(i)} \right) ;$$

- the step for producing (310) the encrypted control word consists of producing said word as resultant of 4 components such that $c = (W_1, W_2, s, U)$ with $U$ vector of $d_s$ values such that

$$U_1 = h^{\frac{1}{\gamma+s_1}}, U_2 = h^{\frac{1}{(\gamma+s_1)\cdot(\gamma+s_2)}}, ..., U_{d_s} = h^{\frac{1}{(\gamma+s_1)...(\gamma+s_{d_s})}},$$

$W_1=(g^\gamma)^m,$

$$W_2 = h^{\frac{m}{(\gamma+s_1)...(\gamma+s_{d_s})}} = U_{d_s}^m$$

, $m$ being an integer;

- the step for producing (110) the plaintext control word $k$ consists of calculating $k$ such that

$$k = e\left( g^\gamma, \prod_{j=1}^{d_x} \left( B_j^{(i)} \right)^{\frac{1}{\prod_{l=1}^{d_s}(\gamma+s_l)}} \right) \cdot e(A_i, W_2)$$

where

$$\prod_{j=1}^{d_x} \left( B_j^{(i)} \right)^{\frac{1}{\prod_{l=1}^{d_s}(\gamma+s_l)}} = \prod_{j=1}^{d_x} \left( B_j^{(i)} \cdot \prod_{y=1}^{d_s} U_y^{(-1)^{j+d_s} \cdot \prod_{n=1}^{y-1}(x_j^{(i)}-s_n)} \right)^{\frac{1}{\prod_{l=1}^{d_s}(x_j^{(i)}-s_l)}}$$

5. Method according to the preceding claim, **characterized in that** it comprises a step for producing revocation data $D_\Re$

such that $D_\Re = (R_1, ..., R_r)$ with $R_1 = h^{\frac{1}{\gamma+x_j^{(1)}}}$, $R_2 = h^{\frac{1}{(\gamma+x_j^{(1)})\cdot(\gamma+x_j^{(2)})}}$, ...,

$$R_r = h^{\frac{1}{(\gamma+x_j^{(1)})\cdots(\gamma+x_j^{(r)})}}$$ and **in that** the generator $h$ adopts the value $R_r$ prior to the implementation of the step for producing (310) the encrypted control word.

6. Method according to the preceding claim, **characterized in that** it comprises a step for modifying the decryption key value prior to the implementation of the step for producing (110) the plaintext of a control word, said key adopting a value $DK_{i,\Re} = \left( A_i, B^{(i,\Re)} \right)$ with

$$B_j^{(i,\Re)} = \left( B_j^{(i)} \right)^{\frac{1}{\prod_{j=1}^r (\gamma+x_w^{(l)})}} = \left( B_j^{(i)} \cdot \prod_{m=1}^r R_m^{(-1)^{j+r} \cdot \prod_{n=1}^{m-1}(x_j^{(i)}-x_w^{(n)})} \right)^{\frac{1}{\prod_{l=1}^r (\gamma-x_w^{(l)})}}$$

for a given value of $w \in$

$[1,d_x]$.

7. Method according to claim 5, **characterized in that** the cypher moreover comprises $D_{\mathfrak{R}}$ and $x_j^{(1)},...,x_j^{(r)}$ for a chosen value of $j \in [1,d_x]$ and **in that** the step for producing (110) $k$ is adapted to produce the plaintext of a control word such that

$$k = e\left( g^{\gamma}, \prod_{j=1}^{d_x}\left(B_j^{(i,\mathfrak{R})}\right)^{\overline{\prod_{l=1}^{d_s}(\gamma+s_l)}} \right) \cdot e\left(A_i, W_2\right)$$

$$\prod_{j=1}^{d_x}\left(B_j^{(i,\mathfrak{R})}\right)^{\frac{1}{\prod_{l=1}^{d_s}(\gamma+s_l)}} = \prod_{j=1}^{d_x}\left( B_j^{(i)} \cdot \prod_{y=1}^{r} U_y^{(-1)^{i+r} \cdot \prod_{n=1}^{y-1}\left(x_j^{(t)}-s_n\right)} \right)^{\frac{1}{\prod_{l=1}^{r}\left(x_j^{(t)}-s_l\right)}}$$

where                                                                                                          .

8. Method for conditional access to a digital content comprising:

- a step for encoding a digital content $M$ and producing an encoded content $C$ using a coding function implemented by a server (3);
- a step for producing (310) by said server (3) an encrypted control word $c$ the plaintext $k$ of which is intended to be used by subscriber processing entities to decode (210) said encoded content $C$;
- a step for transmitting, over a distribution network, to subscriber processing entities, said encoded content $C$ and encrypted control word $c$;
- a step for receiving, by each subscriber processing entity, said encoded content $C$ and encrypted control word $c$;
- a step for producing (110) the plaintext $k$ of a control word, by each subscriber processing entity, from the cypher $c$;
- a step for decoding (210), by each subscriber processing entity, the encoded content $C$ and producing a plaintext content $M$ from a decoding function and the plaintext $k$;
- a step for outputting said plaintext content $M$ by means of an interface adapted to said plaintext content;

**characterized in that**:

- the steps for producing (310) and transmitting an encrypted control word by the protected digital content distribution server, as well as the steps for receiving and producing (110) the plaintext of a control word by the subscriber processing entities, are those of a secure method for transmitting a control word between a server (3) and processing entities (Ea, Eb, Em, Ei) according to any one of claims 1 to 7, so that said secure method

$$t = C_{d_x+d_s-1}^{d_x} = \frac{(d_x+d_s-1)!}{d_x!(d_s-1)!}$$

resists collusions of size                                                                    , $d_s$ and $d_x$ being two integers strictly greater than 1 and respectively utilized by said steps for producing the cypher or the plaintext of said control word.

9. Method according to the preceding claim, each processing entity (Ea, Eb, Em, Ei) consisting of a terminal (2a, 2b, 2m, 2i) and a secure subscriber device (1a, 1b, 1m, 1i), said terminal and said secure subscriber device being coupled and implementing respectively the decoding of an encoded content and the production of the plaintext of an encrypted control word, said method being **characterized in that**:

- the step for receiving an encoded content $C$ and an encrypted control word $c$ by a processing entity consists of:

    i. receiving, by the terminal, the encoded content and the encrypted control word;
    ii. transmitting the encrypted control word $c$ by the terminal to the secure subscriber device cooperating with said terminal;

- the step for producing (110) the plaintext $k$ of a control word by a processing entity consists of producing the latter, by the secure subscriber device, which delivers it to the terminal;

- the step for decoding (210) an encoded content *C* consists of implementing, by the terminal, the decoding function for producing a plaintext content *M* from the encoded content C and from said control word *k*.

10. Server (3) of a system for conditional access to a digital content, said system comprising, apart from said server (3), a plurality of processing entities (Ea, Eb, Em, Ei) linked with the latter, said server (3) being characterized, such that said system implements a method for conditional access according to claims 8 or 9, in that it comprises:

- means for storing a secret value *y* belonging to the set $\mathbb{Z}^*_p$ of the non-zero integers modulo *p*, *p* being a prime number, a bilinear group

$$\beta = (p, \mathbb{G}_1, \mathbb{G}_2, \mathbb{G}_T, e(.,.))$$

of order *p* where e(.,.) is a coupling such that

$$e: \mathbb{G}_1 \times \mathbb{G}_2 \to \mathbb{G}_T,$$

$\mathbb{G}_1, \mathbb{G}_2$ and $\mathbb{G}_T$ being cyclic groups of order *p* and a vector *s* of $d_s$ elements each belonging to the set $\mathbb{Z}^*_p$, $d_s$ being an integer strictly greater than 1 and small with respect to the number of processing entities;

- processing means adapted for producing:

i. a cypher *c* of a control word from the vector *s*, the secret value *y* and two generators belonging respectively to the cyclic groups $\mathbb{G}_1$ and $\mathbb{G}_2$ according to step (310) for producing such a cypher *c* of a secure method for transmitting a control word between a server (3) and processing entities (Ea, Eb, Em, Ei) according to any one of claims 1 to 8, said method being resistant to collusions of a size *t* the value of which depends on that of the integer *ds*;
ii. a content *C* encoded from a plaintext content *M*;

- means for delivering said encoded content *C* and encrypted control word *c* to the plurality of processing entities of the conditional access system.

11. Processing entity (Ea, Eb, Em, Ei) of a conditional access system, said system comprising, apart from said processing entity (Ea, Eb, Em, Ei), a server (3) according to the preceding claim linked with the latter, said processing entity (Ea, Eb, Em, Ei) being characterized, such that said system implements a method for conditional access according to claims 8 or 9, in that it comprises:

- means for storing public parameters comprising a bilinear group

$$\beta = (p, \mathbb{G}_1, \mathbb{G}_2, \mathbb{G}_T, e(.,.))$$

of order *p* prime where *e*(.,.) is a coupling such that

$$e: \mathbb{G}_1 \times \mathbb{G}_2 \to \mathbb{G}_T, \mathbb{G}_1, \mathbb{G}_2, \mathbb{G}_T$$

being cyclic groups of order *p*, said bilinear group being known to the server (3) so that said server (3) produces an encrypted control word c from a vector *s* of $d_s$ elements each belonging to the set $\mathbb{Z}^*_p$, $d_s$ being an integer strictly greater than 1, a secret value *y* and two generators belonging respectively to the cyclic groups $\mathbb{G}_1$ and

$\mathbb{G}_2$;

- means for storing a dedicated decryption key $DK_i$ produced beforehand from:

  i. a vector $x^{(i)}$ of $d_x$ values each belonging to the set $\mathbb{Z}^*_p$ of the non-zero integers modulo $p$, $d_x$ being an integer strictly greater than 1, the vector $x^{(i)}$ being dedicated to said processing entity (Ea, Eb, Em, Ei) ;
  ii. the secret value $y$ known to the server (3);
  iii. a generator belonging to one of the cyclic groups of the bilinear group $\beta$;

- receiving means for receiving from the server (3) an encoded content $C$ and the encrypted control word c;
- processing means (10) adapted for producing a plaintext control word $k$ from said data and the decryption key $DK_i$, according to the step for producing a plaintext control word $k$ of a secure method for transmitting a control word between a server (3) and processing entities (Ea, Eb, Em, Ei) resistant to the collusions according to any one of claims 1 to 7, said method being resistant to collusions of a size

$$t = C^{d_x}_{d_x+d_s-1} = \frac{(d_x + d_s - 1)!}{d_x!(d_s - 1)!} \; ;$$

- processing means for producing (210) a plaintext content $M$ from said data and the control word $k$;
- means for delivering said plaintext content to a human-machine interface adapted (5) for outputting said plaintext content $M$.

12. System for conditional access to a digital content comprising a plurality of processing entities (Ea, Eb, Em, Ei) respectively arranged according to claim 11, a server (3) arranged according to claim 10, said server being moreover linked with said plurality of processing entities (Ea, Eb, Em, Ei) such that said system implements a method for conditional access according to claims 8 or 9.

13. Processing entity (Ea, Eb, Em, Ei) according to claim 11, said processing entity consisting of a terminal (2a, 2b, 2m, 2i) and a secure subscriber device (1a, 1b, 1m, 1i) cooperating with the latter, said terminal comprising:

  - the receiving means for receiving the data from the outside world;
  - means for transmitting to the secure subscriber device the encrypted control word $c$ and receiving in return the plaintext control word $k$;
  - the processing means for producing (210) the plaintext content $M$;
  - the means for delivering said plaintext content to a human-machine interface adapted for outputting said plaintext content;

said electronic subscriber device (1a, 1b, 1m, 1i) comprising:

  - receiving means for receiving the encrypted control word $c$ from the terminal;
  - the storage means for storing the public parameters;
  - the storage means for storing a dedicated decryption key $DK_i$;
  - the processing means for producing (110) the control word $k$ from said cypher $c$ and the key $DK_i$;
  - means for delivering said control word to said terminal.

$$c = E(k)$$
$$C = enc(k, M)$$
$$k = D(c)$$
$$M = dec(k, C)$$

**FIG.1**

$$c = E(k, MK, PP)$$
$$C = enc(M)$$
$$k = D(c, DK_i, PP)$$
$$M = dec(k, C)$$

**FIG.2**

Ei

$C,c$

$M$

3

4

$c$

2i        1i        5

$k$

$PP$

300 - - - - - - - - - - - - - - - - - - - - - 100

$DK_i$

301 - - - - - - - - - - - - - - - - - - - - - 101

$C,c$        $c$

310 - - - - - - - - - - - - - - - - - - - - - 110

210        $k$

$M$

# FIG.3

**EP 2 643 943 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080075287 A1
- WO 2007138204 A